(19) Europäisches Patentamt / European Patent Office / Office européen des brevets

(11) **EP 3 132 157 B1**

(12) **FASCICULE DE BREVET EUROPEEN**

(45) Date de publication et mention de la délivrance du brevet:
**16.03.2022 Bulletin 2022/11**

(21) Numéro de dépôt: **15715737.1**

(22) Date de dépôt: **14.04.2015**

(51) Classification Internationale des Brevets (IPC):
**F16F 9/512** *(2006.01)*

(52) Classification Coopérative des Brevets (CPC):
**F16F 9/512**

(86) Numéro de dépôt international:
**PCT/EP2015/058001**

(87) Numéro de publication internationale:
**WO 2015/158675 (22.10.2015 Gazette 2015/42)**

(54) **AMORTISSEUR HYDRAULIQUE AVEC FILTRAGE EN COMPRESSION**

HYDRAULISCHER STOSSDÄMPFER MIT KOMPRESSIONSFILTERUNG

HYDRAULIC SHOCK ABSORBER WITH COMPRESSION FILTERING

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **16.04.2014 FR 1453398**

(43) Date de publication de la demande:
**22.02.2017 Bulletin 2017/08**

(73) Titulaires:
- **Sirven, Jacques**
  **F-78000 Versailles (FR)**
- **Sirven, Marc**
  **75015 Paris (FR)**
- **Sirven, François**
  **75015 Paris (FR)**
- **Sirven, Aude**
  **75015 Paris (FR)**
- **Bordier, Alain**
  **1255 Veyrier (CH)**

(72) Inventeurs:
- **SIRVEN, Jacques**
  **78000 Versailles (FR)**
- **SIRVEN, Marc**
  **75015 Paris (FR)**
- **SIRVEN, François**
  **75015 Paris (FR)**
- **SIRVEN, Aude**
  **75015 Paris (FR)**

(74) Mandataire: **Casalonga**
**Casalonga & Partners**
**Bayerstraße 71/73**
**80335 München (DE)**

(56) Documents cités:
DE-B3-102007 009 012    FR-A1- 2 505 267
FR-A1- 2 838 172        US-A- 2 031 000

- **None**

**Description**

L'invention concerne de manière générale le domaine des amortisseurs, notamment pour véhicule automobile.

Un amortisseur hydraulique, utilisé en particulier dans un véhicule automobile, permet d'accroître notablement l'adhérence des pneumatiques des roues du véhicule automobile sur le sol, tout en amortissant les mouvements de la masse suspendue du véhicule. Un tel dispositif comprend généralement un cylindre rempli de fluide hydraulique, à l'intérieur duquel peut se déplacer un piston principal actionné par une tige. Le piston définit dans le cylindre une première chambre et une deuxième chambre contenant la tige. Lorsque le piston se déplace à l'intérieur du cylindre, le volume immergé de la tige varie, ce qui entraîne une variation du volume disponible pour l'huile à l'intérieur du cylindre. Un réservoir de fluide hydraulique est donc connecté au cylindre afin de compenser ces variations.

Lors d'un mouvement de compression au cours duquel la tige pénètre dans le cylindre, le fluide hydraulique est refoulé par le piston principal de la première chambre, vers la deuxième chambre. Afin de générer une force hydraulique opposée au mouvement de la suspension, on fait passer le fluide refoulé à travers des restrictions qui peuvent être de différents types. On peut utiliser de simples orifices calibrés, des clapets constitués par des clinquants ou pièces métalliques légères, ou encore des valves spécifiques.

Dans un amortisseur conventionnel, la force d'amortissement dépend de la vitesse de compression ou de détente. Une telle réponse peut engendrer des problèmes lors d'un mouvement de compression de l'amortisseur. Une accélération brutale subie par la roue, par exemple au passage de petits obstacles en relief de la chaussée, peut générer une variation importante de la force d'amortissement, le choc en résultant pouvant être ressenti de manière désagréable à l'intérieur du véhicule. Pour éviter de tels chocs, on diminue généralement l'amortissement lors d'une compression. L'amortissement risque alors d'être insuffisant pour contrôler convenablement les mouvements de la caisse du véhicule. On peut envisager d'accroître l'amortissement lors d'une détente afin de palier cette difficulté, mais il en résulte alors un risque de perte d'adhérence lorsque la chaussée présente des creux, la roue du véhicule ne parvenant plus à suivre le profil de la chaussée.

Un dispositif amortisseur décrit dans la demande de brevet français FR 2 838 172 comporte une valve présentant une soupape. Des moyens de filtrage sont montés en parallèle de la valve afin de générer une pression de commande agissant sur la soupape de la valve. Dans un tel amortisseur, on utilise la variation de pression entre la première et la deuxième chambre principales du cylindre de l'amortisseur pour générer, par les moyens de filtrage, une pression de commande agissant sur la soupape. Les phénomènes de percussion rencontrés sur les amortisseurs classiques sont ainsi filtrés.

Un tel amortisseur présente d'excellentes performances. Mais sa structure est complexe de sorte qu'une fabrication en grande série est difficile à realiser.

< Un autre amortisseur, décrit dans le document DE 102007009012, comporte des clapets montés dans le piston principal et un dispositif de valve auxiliaire, qui, lors d'un mouvement de compression peut agir sur une valve principale dans un sens qui tend à fermer la communication entre le corps de l'amortisseur et le réservoir- >

La présente invention a pour objet un amortisseur capable de résoudre ces problèmes.

L'amortisseur selon l'invention doit notamment permettre d'accroître l'adhérence du pneumatique d'une roue de véhicule sur la chaussée tout en amortissant parfaitement les mouvements de la caisse du véhicule. L'amortisseur doit être capable de générer une force d'amortissement en compression qui ne répercute pas les effets des accélérations brutales subies par la roue au passage de petits obstacles en relief sur la chaussée. Enfin ces résultats avantageux doivent être obtenus au moyen d'une structure simple, aisément réalisable en grande série.

Selon un premier aspect de l'invention, un amortisseur, notamment pour véhicule automobile, comprend un cylindre contenant un fluide hydraulique, un piston principal actionné par une tige, définissant dans le cylindre une première chambre principale et une deuxième chambre principale, la deuxième chambre principale contenant la tige. L'amortisseur comporte également un réservoir de fluide hydraulique et une valve placée dans l'écoulement du fluide hydraulique entre la première chambre principale et la deuxième chambre principale ou entre la première chambre principale et le réservoir.

La valve comprend une soupape mobile coopérant avec un siège, un ressort tendant à appliquer la soupape sur son siège, et un piston de valve mobile, définissant dans la valve une première chambre de valve et une deuxième chambre de valve, le dit piston mobile étant apte à comprimer le ressort et fermer la soupape.

L'amortisseur comporte en outre une restriction de commande montée dans l'écoulement du fluide hydraulique issu de la première chambre principale lors d'un mouvement de compression, la restriction de commande étant apte à générer une différence de pression agissant sur les faces respectives du piston de valve mobile, dans un sens tendant à comprimer le ressort, lors d'un mouvement de compression de l'amortisseur.

Enfin l'amortisseur comprend en outre un moyen de freinage du déplacement du piston de valve mobile.

Dans un exemple de réalisation, le moyen de freinage peut comprendre une restriction de filtrage placée dans l'écoulement du fluide provoqué par le déplacement du piston de valve mobile. La restriction de filtrage est traversée par un flux d'huile dépendant du mouvement du piston de valve mobile à l'intérieur de la valve, ce qui provoque un effet de freinage du mouvement du piston mobile.

Lors d'un mouvement de compression, une grande partie du fluide chassé de la première chambre principale traverse la valve et la restriction de commande, puis rejoint la deuxième chambre principale. Au moyen de conduites comprenant la restriction de filtrage, des pressions de commande filtrées sont appliquées sur les faces du piston de valve mobile. Ce piston de valve, soumis à l'action de ces pressions hydrauliques agissant sur ses faces, comprime le ressort et ferme la soupape. Toute variation de la force d'appui du ressort se traduit par une variation de la chute de pression de l'huile au passage de la soupape et une variation concomitante de la force d'amortissement. La restriction de filtrage empêche les mouvements rapides du piston et supprime les variations brusques de la force d'amortissement.

En prévoyant à la fois une restriction de commande et un moyen de freinage du piston mobile à l'intérieur de la valve, par exemple sous la forme d'une restriction de filtrage, on peut adapter la différence de pression agissant sur le piston de valve à la vitesse de compression tout en mettant en place un filtrage fréquentiel qui permet d'empêcher toute variation brutale de la force d'amortissement, par exemple, lors du passage de la roue du véhicule sur de petits obstacles en relief de la chaussée.

Dans certains cas, il peut être avantageux que le filtrage soit asymétrique. A cet effet, la restriction de filtrage peut être adaptée pour freiner plus l'écoulement dans un sens que dans l'autre.

Durant les phases de détente, le mode de fonctionnement de l'amortisseur est classique, la force d'amortissement ne dépendant que de la vitesse du mouvement de détente.

Dans un mode de réalisation, un premier circuit relie la première chambre principale à un point de partage de l'écoulement, un deuxième circuit relie le point de partage à la deuxième chambre principale et un troisième circuit relie le point de partage au réservoir. La valve, comme la restriction de commande, peuvent être disposées sur l'un quelconque des circuits précités.

La valve et la restriction de commande peuvent être disposées sur deux circuits différents ou sur le même circuit. Si la valve et la restriction de commande sont disposées sur le même circuit, la restriction de commande peut être disposée en amont ou en aval de la valve, si l'on considère l'écoulement du fluide hydraulique lors d'un mouvement de compression.

Le filtrage de la force d'amortissement étant effectué par l'intermédiaire de la valve, il est généralement souhaitable que la valve soit traversée par le débit de fluide hydraulique le plus important. A cet effet, la valve sera donc de préférence placée dans le premier circuit reliant la première chambre principale au point de partage de l'écoulement ou, à la rigueur dans le deuxième circuit reliant le point de partage à la deuxième chambre principale. Dans ce dernier cas, la pression dans le réservoir doit être suffisamment élevée pour dépasser la pression à la sortie de la valve, sous peine de risques de cavitation.

Dans certains exemples de réalisation cependant, l'amortisseur joue également un rôle de compensateur de charge et le volume et la pression dans le réservoir sont augmentés pour en faire l'équivalent d'un ressort. La section de la tige de l'amortisseur est augmentée de façon que le flux circulant dans le troisième circuit soit plus important que le flux circulant dans le deuxième circuit. Dans ce cas, la valve peut avantageusement être placée dans le troisième circuit ou encore dans le deuxième circuit.

Dans un mode de réalisation, une seconde restriction de commande est montée sur l'un des circuits précités. La seconde restriction de commande est apte à générer une différence de pression agissant sur les faces du piston de valve mobile dans un sens tendant à diminuer la tension du ressort, lors d'une compression de l'amortisseur.

Dans une variante, le piston de valve mobile peut comporter deux flasques d'extrémité séparés par une gorge périphérique de manière à former, avec une cloison de séparation intérieure dans la valve, une première chambre auxiliaire et une deuxième chambre auxiliaire. Une restriction de filtrage est montée dans l'écoulement du fluide provoqué par le déplacement du piston de valve mobile.

Lorsqu'une seule restriction de commande est prévue, la force d'amortissement croit lorsque la vitesse de compression augmente. Les deux restrictions de commande prévues dans certains modes de réalisation présentent de préférence des caractéristiques différentes de façon, par exemple, à faire décroître la force d'amortissement pour les hautes vitesses du mouvement de compression de l'amortisseur (typiquement à partir de 25 à 30 cm/s). Il est ainsi possible d'obtenir une loi d'amortissement en compression selon laquelle, lorsque la vitesse de compression augmente, la force d'amortissement commence par croître, passe par un maximum puis décroit aux vitesses de compression élevées. Ce type de loi, associé au freinage du déplacement du piston de valve mobile, rend le véhicule équipé d'un tel amortisseur particulièrement confortable.

Dans un autre mode de réalisation, le réservoir comprend une chambre à gaz à paroi mobile disposée dans le cylindre au voisinage de son extrémité opposée à la tige du piston principal. Dans ce mode de réalisation, un unique circuit relie la première chambre principale à la deuxième chambre principale, et la valve est disposée dans ledit circuit avec la restriction de commande en amont ou en aval de la valve, si l'on considère l'écoulement du fluide hydraulique lors d'un mouvement de compression.

Dans un mode de réalisation, la soupape mobile comporte un anneau de contact formant une excroissance annulaire périphérique sur sa base, et une pluralité de conduits axiaux. Le contact entre la soupape mobile et son siège se fait ainsi par l'excroissance annulaire de la soupape, le diamètre de cette excroissance étant supérieur à celui de l'orifice d'entrée de la valve. Le soulèvement de la soupape se traduit alors par une ouverture d'une section de passage plus importante.

Une telle structure rend l'écoulement stable quel que soit le débit.

Dans certains exemples de réalisation, la tige de la soupape mobile comporte une première partie présentant une première section et une seconde partie présentant une seconde section. La valve comporte une première chambre supplémentaire et une seconde chambre supplémentaire à l'intérieur desquelles peut se déplacer la première partie de la tige de la soupape mobile.

Un tel dessin de la tige de la soupape mobile conjugué à une telle valve comprenant deux chambres supplémentaires permet d'augmenter la part exempte de hautes fréquences de la force d'amortissement.

De préférence, le rapport de la première à la deuxième section de la tige de la soupape mobile est le même que le rapport de la surface du piston principal de l'amortisseur à la section de la tige de l'amortisseur.

La force demandée au ressort pour générer une chute de pression importante est faible, car les forces de pression s'exerçant sur les deux faces opposées de la soupape mobile s'équilibrent partiellement.

Au cours des phases de détente, du fluide hydraulique provenant du réservoir de fluide hydraulique rejoint la première chambre principale. Ce flux traverse la soupape mobile en entrainant la soupape sur son siège. Cela a pour effet de faciliter le retour de la soupape à sa position de début de compression.

Dans un mode de réalisation, le réservoir de fluide hydraulique est relié à la première chambre principale par une conduite sur laquelle est disposée une pièce de connexion tenant à la fois le rôle de clapet anti-retour et de point de connexion entre une pluralité de conduites reliant entre elles, lors d'une détente, la première chambre de valve, la seconde chambre de valve et le réservoir.

Une telle pièce de connexion rééquilibre les forces de pression agissant sur les faces du piston de valve mobile, de sorte que le ressort soit plus rapidement détendu et la soupape plaquée contre son siège. De cette façon, le filtrage agit dès le début de la compression et la suspension est encore plus confortable.

On peut prévoir plusieurs variantes de disposition de la valve par rapport à l'amortisseur. Dans une première variante, la valve est disposée à l'extérieur du cylindre de l'amortisseur et connectée aux deux chambres principales par l'intermédiaire d'un tube entourant le cylindre de l'amortisseur. Dans une seconde variante, la valve et les différentes restrictions sont montées dans le piston principal, la tige étant creuse et faisant communiquer la valve avec un réservoir disposé à l'extrémité de la tige opposée au piston principal.

Le réservoir peut être formé par un tube extérieur entourant le cylindre de l'amortisseur.

On notera qu'une restriction de commande dans un amortisseur selon l'invention peut être placée dans l'un des circuits hydrauliques de l'amortisseur dès lors que le débit dans ce circuit est proportionnel à la vitesse du mouvement de compression de l'amortisseur. Selon la façon de connecter une telle restriction de commande aux chambres de valve ou, s'il y a lieu, aux chambres auxiliaires de la valve, la différence de pression créée par la restriction sera capable d'agir dans le sens d'une fermeture ou d'une ouverture de la soupape de la valve.

De plus, dès lors qu'une chambre de valve ou une chambre auxiliaire de valve comporte une paroi se déplaçant avec le piston de valve mobile, on peut disposer une restriction de filtrage sur l'écoulement du fluide entre cette chambre de valve ou chambre auxiliaire et le circuit dans lequel est montée une restriction de commande.

Dans les modes de réalisation précédemment décrits, la restriction de commande et la restriction de filtrage génèrent une chute de pression qui dépend uniquement du débit qui les traverse. Dans d'autres modes de réalisation, il est possible d'utiliser un pilotage de la restriction de commande et/ou de la restriction de filtrage. La chute de pression générée par la ou les restrictions pilotées dépend alors non seulement du débit qui les traverse mais également d'un autre paramètre, par exemple un signal de commande émis par l'ordinateur de bord du véhicule équipé de l'amortisseur de l'invention.

De cette manière, on peut régler à distance les caractéristiques de l'amortisseur et obtenir ce que l'on appelle un « amortisseur piloté ».

Dans tous les modes de réalisation précédemment décrits, le piston de valve mobile s'appuie sur le ressort qu'il comprime et l'amplitude du déplacement du piston mobile dépend uniquement des caractéristiques du ressort.

Dans d'autres modes de réalisation, le déplacement du piston de valve mobile peut être limité, en prévoyant une butée sur le trajet du piston, ladite butée étant prévue à l'intérieur d'une des chambres de valve. Généralement, cette butée est fixe. Dans certains modes de réalisation, cette butée peut-être mobile et déplacée sous l'action d'une commande à distance de façon à obtenir un amortisseur piloté.

D'autres buts, caractéristiques et avantages de l'invention apparaitront à la lecture de la description suivante de quelques modes de réalisation constituant uniquement des exemples non limitatifs, et faite en référence aux dessins annexés sur lesquels :

- la figure 1 montre très schématiquement un premier exemple d'amortisseur,
- la figure 2 illustre très schématiquement un deuxième exemple d'amortisseur,

- la figure 3 illustre schématiquement un amortisseur selon un premier mode de réalisation de l'invention,
- la figure 4 illustre schématiquement un amortisseur selon un second mode de réalisation de l'invention,
- la figure 5 illustre schématiquement un amortisseur selon une première variante du deuxième mode de réalisation de l'invention,
- la figure 6 illustre schématiquement un amortisseur selon une deuxième variante du deuxième mode de réalisation de l'invention,
- la figure 7 illustre schématiquement un amortisseur selon une troisième variante du deuxième mode de réalisation de l'invention,
- la figure 8 illustre un amortisseur selon un troisième mode de réalisation,
- la figure 9 montre des courbes de forces hydrauliques en fonction de la vitesse de compression de l'amortisseur,
- la figure 10 est une vue en coupe longitudinale d'un premier exemple de réalisation pratique d'un amortisseur selon l'invention,
- la figure 11 est une vue en coupe agrandie selon deux plans de coupe différents de la valve de commande de l'amortisseur de la figure 10, montrant le trajet du fluide lors d'un mouvement de compression,
- la figure 12 est une vue en coupe longitudinale d'un deuxième exemple de réalisation pratique d'un amortisseur selon l'invention,
- la figure 13 est une vue en coupe agrandie selon deux plants de coupe différents de la valve de commande de l'amortisseur de la figure 12, montrant le trajet du fluide lors d'un mouvement de détente,
- la figure 14 est une vue de dessus d'une pièce pouvant être incorporée dans un clapet anti-retour de la valve de commande de la figure 13,
- la figure 15 illustre schématiquement un amortisseur selon un quatrième mode de réalisation,
- la figure 16 illustre un amortisseur selon un cinquième mode de réalisation, et
- la figure 17 illustre schématiquement un amortisseur selon une variante du cinquième mode de réalisation de l'invention.

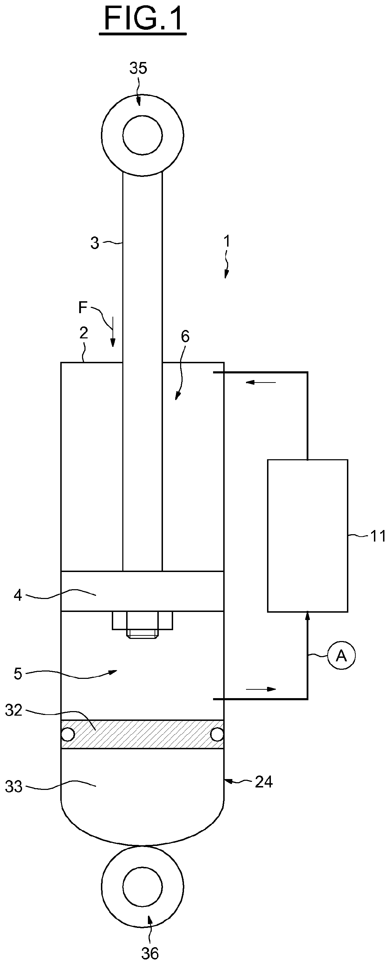

La figure 1 représente très schématiquement un premier exemple d'amortisseur 1 selon l'invention.

L'amortisseur 1 comprend un cylindre 2 à l'intérieur duquel est montée une tige coulissante 3, liée à un piston principal 4 délimitant à l'intérieur du cylindre 2 une première chambre principale 5 et une seconde chambre principale 6, la seconde chambre 6 contenant la tige 3. A l'extrémité du cylindre 2 opposée à la tige 3, se trouve un réservoir 24 muni d'un piston de réservoir 32 coulissant à l'intérieur du cylindre 2 et délimitant une chambre de réservoir 33 remplie d'un gaz. A l'extrémité de la tige principale 3 se trouve un premier anneau 35 destiné à permettre le raccordement à la caisse du véhicule. A l'extrémité du cylindre 2 se trouve un second anneau 36 destiné à permettre le raccordement à un organe lié à l'une des roues d'un véhicule.

L'amortisseur 1 comprend une valve 11 disposée dans un circuit A reliant la première chambre 5 à la deuxième chambre 6.

Lors d'un mouvement de compression schématisé par la flèche F, le fluide s'échappe de la première chambre 5, traverse la valve 11 et revient dans la deuxième chambre 6 en suivant le circuit indiqué par des flèches sur la figure. L'augmentation du volume immergé de la tige 3 est compensée par un déplacement vers le bas du piston de réservoir 32.

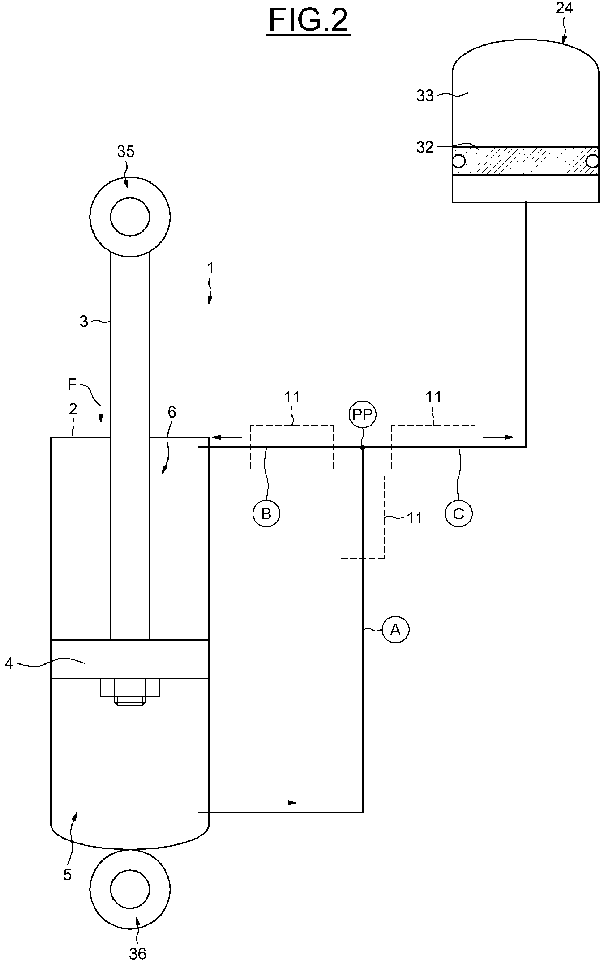

La figure 2 illustre très schématiquement un deuxième exemple d'amortisseur selon l'invention. Les éléments identiques portent les mêmes références.

Dans ce deuxième exemple, le réservoir 24 est placé à l'extérieur du cylindre 2. Trois circuits hydrauliques notés A, B et C sur la figure peuvent être définis et se rejoignent à un point de partage PP. Le circuit A relie la première chambre 5 au point de partage PP. Le circuit B relie le point de partage PP à la deuxième chambre 6 et le circuit C relie le point de partage PP au réservoir 24. Le sens de l'écoulement du fluide lors d'un mouvement de compression symbolisé par la flèche F, est indiqué par des flèches. La valve 11 peut être disposée sur l'un des circuits A, B ou C, trois positions étant indiquées en pointillés sur la figure.

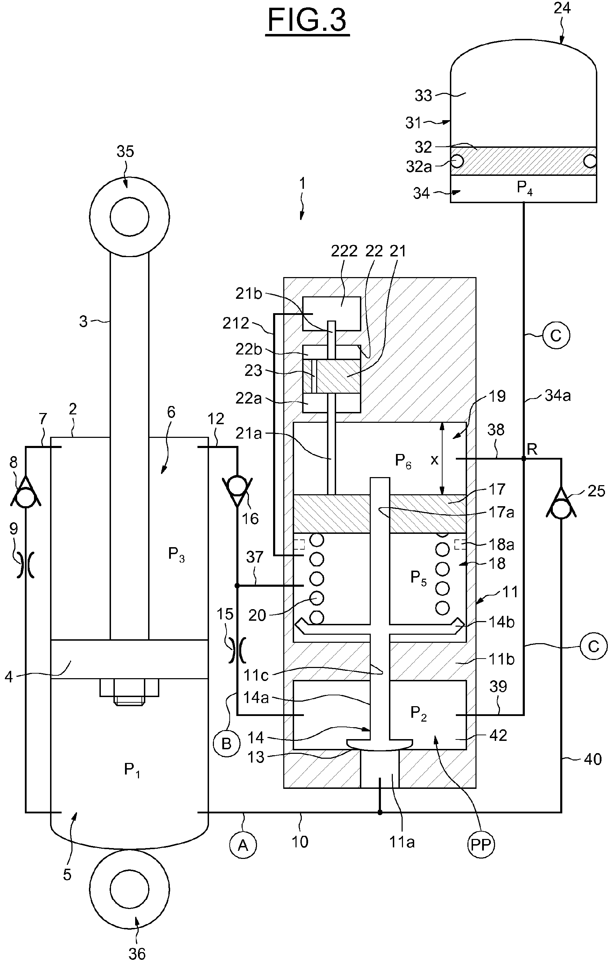

La Figure 3 illustre schématiquement un mode de réalisation d'un amortisseur selon l'invention correspondant à l'exemple de la figure 2. Les éléments identiques portent les mêmes références. La valve 11, disposée dans le circuit A présente un orifice 11a d'entrée de fluide délimité par un siège 13. L'orifice 11a peut être plus ou moins fermé au moyen d'une soupape mobile 14 coopérant avec le siège 13. La soupape mobile 14 peut se déplacer au sein d'une chambre de soupape 42 pratiquée dans la valve 11. La soupape mobile 14 comprend une partie en forme de tige 14a, apte à coulisser dans un alésage 11c prévu dans une paroi interne 11b disposée à l'intérieur de la valve 11. La soupape mobile 14 comprend également un épaulement 14b en forme de disque creux solidaire de la tige 14a et se trouvant, par rapport à la paroi interne 11b, de l'autre côté du siège 13.

La valve 11 comprend en outre un piston de valve mobile 17 coulissant à l'intérieur de la valve 11 et délimitant une première chambre de valve 18 et une seconde chambre de valve 19. Un ressort 20, ici sous la forme d'un ressort hélicoïdal, est disposé dans la chambre de valve 18, entre une face du piston de valve mobile 17 et l'épaulement 14b de la soupape mobile 14. On notera que la tige 14a de la soupape mobile peut coulisser dans un alésage 17a pratiqué dans le piston de valve mobile 17. Dans l'exemple illustré, le piston de valve mobile 17 est par ailleurs solidaire, par l'intermédiaire d'une tige d'entretoise 21a, d'un piston de freinage 21 coulissant dans un logement 22 pratiqué dans le corps de la valve 11. Le piston de freinage 21 est traversé par un ajutage 23 permettant un écoulement du fluide d'un côté à l'autre du piston 21 lorsque celui-ci se déplace. L'écoulement du fluide est limité par le diamètre de l'ajutage 23, ce qui freine le déplacement du piston de freinage 21 et donc du piston de valve mobile 17. Pour équilibrer les forces de pression s'appliquant sur l'ensemble solidaire constitué par le piston de valve 17 et le piston de freinage 21, une seconde tige d'entretoise 21b est fixée au piston de freinage 21. La seconde tige 21b est plus courte que la tige 21a et son extrémité se déplace dans une chambre d'équilibrage 222. La chambre d'équilibrage 222 est mise à la pression P5 de la première chambre de valve, au moyen d'une conduite 212.

L'amortisseur comprend également un réservoir de fluide hydraulique 24 muni d'un piston de réservoir 32 coulissant de manière étanche au moyen d'un joint 32a dans une enceinte 31, et délimitant dans celle-ci une première chambre de réservoir 33 remplie d'un gaz et une chambre de pression statique 34 recevant le fluide hydraulique. La fonction du réservoir est de compenser la variation de volume dans le cylindre 2, due à la partie immergée de la tige 3, lors d'une détente ou d'une compression de l'amortisseur 1. La chambre 34 est reliée par une conduite de prolongement 34a à un point de connexion R. Par la suite, par les expressions « relié au réservoir 24 » ou « relié à la chambre 34 », on entendra que le composant est relié au point de connexion R de la conduite de prolongement 34a de la chambre 34 du réservoir de fluide hydraulique 24. Le réservoir 24 est ainsi monté à l'extrémité du circuit C.

L'amortisseur 1 comprend une conduite de détente 7, entre la première chambre principale 5 et la seconde chambre principale 6. La conduite 7 comporte un clapet anti-retour 8, permettant au fluide hydraulique de circuler de la seconde chambre principale 6 vers la première chambre principale 5. La conduite de détente 7 est en outre munie d'une restriction de détente 9.

L'amortisseur 1 comprend également une première conduite de compression 10 entre la première chambre principale 5 et l'orifice d'entrée 11a de la valve 11 et une deuxième conduite de compression 12 reliant la deuxième chambre principale 6 à la chambre de soupape 42 de la valve 11. Les conduites 10 et 12 correspondent respectivement aux circuits A et B de la figure 2.

Sur la conduite 12 correspondant au circuit B sont montés une restriction de commande 15 et un clapet anti-retour 16, interdisant la circulation du fluide depuis la seconde chambre principale 6 vers la valve 11, de sorte que la circulation est établie uniquement lorsque l'amortisseur fonctionne en compression.

La valve 11 est montée dans ce mode de réalisation sur le circuit A, le point de partage PP se trouvant dans la chambre de soupape 42 entre la première chambre principale 5 et la deuxième chambre principale 6. Lors d'un mouvement de compression, le fluide hydraulique s'écoule depuis la première chambre principale 5 à travers la conduite 10 correspondant au circuit A, une partie du fluide traversant ensuite la chambre de soupape 42 correspondant au point de partage PP avant de revenir dans la deuxième chambre principale 6 par la conduite 12 correspondant au circuit B. L'amortisseur 1 comporte en outre une conduite 37 piquée sur la conduite 12, entre le clapet anti-retour 16 et la restriction de commande 15, et communiquant avec la première chambre de valve 18 de la valve 11. Une conduite 38 est disposée entre le point de connexion R et la deuxième chambre de valve 19. Une conduite 39 relie le point de connexion R à la chambre de soupape 42 de la valve 11. Le circuit C de la figure 2 comprend les conduites 39 et 34a. Une conduite 40 relie le point de connexion R à la première chambre principale 5 de l'amortisseur par l'intermédiaire de la conduite 10. La conduite 40 comporte un clapet anti-retour 25 interdisant l'écoulement du fluide hydraulique de la première chambre principale 5 vers le point de connexion R et la chambre 34 du réservoir de fluide hydraulique 24.

On va maintenant expliquer le fonctionnement de l'amortisseur. On désigne par x la distance variable entre le piston de valve mobile 17 et la partie supérieure de la deuxième chambre de valve 19. x définit donc la position du piston de valve 17 dans la valve 11.

On note les pressions suivantes :

- P1 est la pression dans la première chambre principale 5,
- P2 est la pression dans la chambre de soupape 42,
- P3 est la pression dans la deuxième chambre principale 6,
- P4 est la pression dans la chambre 34 du réservoir 24,
- P5 est la pression dans la première chambre de valve 18, et
- P6 est la pression dans la seconde chambre de valve 19.

Lorsque l'amortisseur fonctionne en détente, la tige 3 sort du cylindre 2. Le fluide hydraulique chassé de la deuxième chambre principale 6 emprunte la conduite de détente 7 en direction de la première chambre principale 5. La restriction de détente 9 génère alors une force d'amortissement en détente. Le clapet anti-retour 16 isole la valve 11 qui n'a pas de fonction au cours de la détente. Lors du fonctionnement en détente, la partie immergée de la tige voit son volume diminuer. Afin de compenser cette diminution de volume, le réservoir 24 fournit du fluide hydraulique à la première chambre principale 5 à partir de la chambre 34, à travers le point de connexion R, puis le clapet anti-retour 25 et la conduite 40.

On remarquera que le fonctionnement de ce mode de réalisation en détente est comparable à celui d'amortisseurs non munis de valve et connus de l'état de la technique.

Lorsque l'amortisseur fonctionne en compression, la pression P3 de la deuxième chambre principale 6 décroît fortement. Le clapet anti-retour 16 laisse circuler le fluide. Par les conduites 12 et 37, la première chambre de valve 18 est mise à la pression de la deuxième chambre principale 6.

On a donc : P3 = P5.

Par les conduites 38 et 39, on a : P2 = P4 = P6

On peut donc décrire le fonctionnement de l'amortisseur en compression à partir des seules pressions P1, P2 et P3.

Lors d'une compression, le fluide est chassé de la première chambre principale 5, et ne peut emprunter ni la conduite de détente 7, à cause du clapet anti-retour 8, ni la conduite 40, à cause du clapet anti-retour 25. Il emprunte par conséquent la première conduite 10 et pénètre par l'orifice d'entrée 11a dans la chambre de soupape 42 de la valve 11. Le fluide hydraulique est freiné par la soupape mobile 14 appuyée sur son siège 13 et subit une chute de pression P1 - P2. Il se divise ensuite en deux flux. Le plus important rejoint la seconde chambre principale 6 en traversant la restriction de commande 15, qui crée une chute de pression P2 - P3. Le second flux, plus faible, rejoint le réservoir 24 via les conduites 39 et 34a. Il est lié à l'augmentation du volume de la partie immergée de la tige 3.

La première chambre de valve 18 est soumise à une pression P5 qui est égale à la pression P3 de la deuxième chambre principale 6. La deuxième chambre de valve 19 est soumise à une pression P6 qui est égale à la pression P4 du réservoir 24, par ailleurs égale à la pression P2 régnant dans la chambre de soupape 42. Les pressions P2 et P3 sont donc appliquées aux deux faces respectives du piston de valve mobile 17, qui comprime le ressort 20. Cela a pour effet d'appuyer la soupape mobile 14 sur son siège 13 et d'augmenter la différence de pression entre P1 et P2. Il en résulte finalement une augmentation de la force d'amortissement.

Le piston de freinage 21 muni de son ajutage 23 étant lié au piston de valve mobile 17, il ralentit les mouvements de celui-ci. La force d'amortissement est donc soumise à un filtrage.

L'explication du fonctionnement peut être précisée par les calculs suivants.

On désignera par la suite :

- FA : la force d'amortissement,
- F : l'effort exercé par les pressions P1 et P3 sur la tige 3,
- ST : la section de la tige 3,
- FR : la force exercée par le ressort 20,
- k : la rigidité du ressort 20,
- SP : la surface du piston principal 4,
- SC : la surface du piston de valve 17,
- SV : la section de la soupape mobile 14 soumise à la différence de pression P1 - P2, et
- A : un coefficient de proportionnalité liant la force de freinage du piston de freinage 21 à la vitesse de déplacement de celui-ci.

Pour obtenir la force d'amortissement FA, il faut soustraire de la force F exercée sur la tige 3, la valeur de la force résultant de la pression statique P4 du réservoir 24, laquelle est égale à la pression P2, sur la section ST de la tige 3, selon la relation :

$$FA = F - P2.ST$$

La force F exercée sur la tige 3 s'exprime à partir de la relation suivante :

$$F = P1.SP - (SP - ST).P3$$

On déduit des deux relations précédentes, la relation suivante :

$$FA = SP.(P1 - P2) + (SP - ST).(P2 - P3)$$

Cette force d'amortissement comprend donc deux termes que nous nommerons F1 et F2.

On a :

$$F1 = SP.(P1 - P2)$$

$$F2 = (SP - ST).(P2 - P3)$$

La relation précédente s'écrit alors FA = F1 + F2.

F1 dépend de la différence entre les pressions P1 et P2 créée par la soupape mobile 14 de la valve, et F2 dépend de la différence entre les pressions P2 et P3 créée par le passage du fluide hydraulique à travers la restriction de commande 15. Nous allons montrer que le terme F1 filtre les hautes fréquences et que le terme F2 est petit devant le terme F1.

La force FR exercée par le ressort 20 s'écrit de trois façons différentes :

$$(1)\ FR = k.x\ ;$$

$$(2)\ FR = (P2 - P3).SC - A.dx/dt\ ;$$

et

$$(3)\ FR = SV.(P1 - P2).$$

De (3), on peut écrire la relation (4) :

$$FR = F1.(SV/SP) \qquad (4)$$

De (1) et (4), on déduit la relation (5) :

$$x = (1/k).(SV/SP).F1 \qquad (5)$$

En couplant (1) et (2), on voit apparaitre l'équation de filtrage :

$$kx + A.(dx/dt) = SC.(P2 - P3).$$

Qui peut s'écrire, en tenant compte de la relation (5):

$$F1 + [A/k].[dF1/dt] = [SC.SP/SV].(P2 - P3)\ (6)$$

tandis que

$$F2 = (SP - ST).(P2 - P3) \qquad (7)$$

Les relations (6) et (7) montrent par conséquent que la force F1 est filtrée par un filtre passe-bas du premier ordre et qu'elle est, comme F2, proportionnelle à la différence de pression (P2 - P3) générée par la restriction de commande 15.

En comparant les deux coefficients de proportionnalité, [SC.SP/SV] pour F1 et (SP - ST) pour F2, on constate que F1 est beaucoup plus grande que F2. En effet, la section SV est inférieure à la section SC du piston de valve (, elle peut être par exemple 16 à 18 fois inférieure). Le coefficient de F1 est beaucoup plus important que celui de F2.

La restriction de commande 15 n'engendre que des chutes de pression de 1 à 2 bars (100 à 200 kPa), entrainant une chute de pression à travers la valve 11 bien plus importante puisqu'on la multiplie par le coefficient de proportionnalité précité.

Au moyen du filtre passe-bas, l'amortisseur peut éliminer 90% des percussions à haute fréquence que génère un amortisseur classique en phase de compression. D'autres modes de réalisation exposés par la suite peuvent améliorer encore cette réponse.

Dans certains cas, il peut être avantageux de limiter la force d'amortissement en compression en limitant, par exemple l'aide d'une butée, le déplacement du piston mobile 17. On peut à cet effet prévoir d'ajouter dans la première chambre de valve 18 une butée optionnelle qui a été représentée sur la figure 3 en pointillés et référencée 18a. Grâce à la butée 18a, la force exercée par le ressort 20 sur la soupape 14 ne peut dépasser une certaine valeur, ce qui plafonne la force d'amortissement en compression.

La restriction de commande 15 génère une différence de pression qui dépend uniquement du débit qui la traverse. Dans une variante, on peut envisager, sans sortir du cadre de l'invention, d'utiliser une restriction de commande pilotable. Il est alors possible, en modifiant à distance la caractéristique de la restriction de commande, par exemple en fonction de la vitesse du véhicule, d'ajuster la loi d'amortissement.

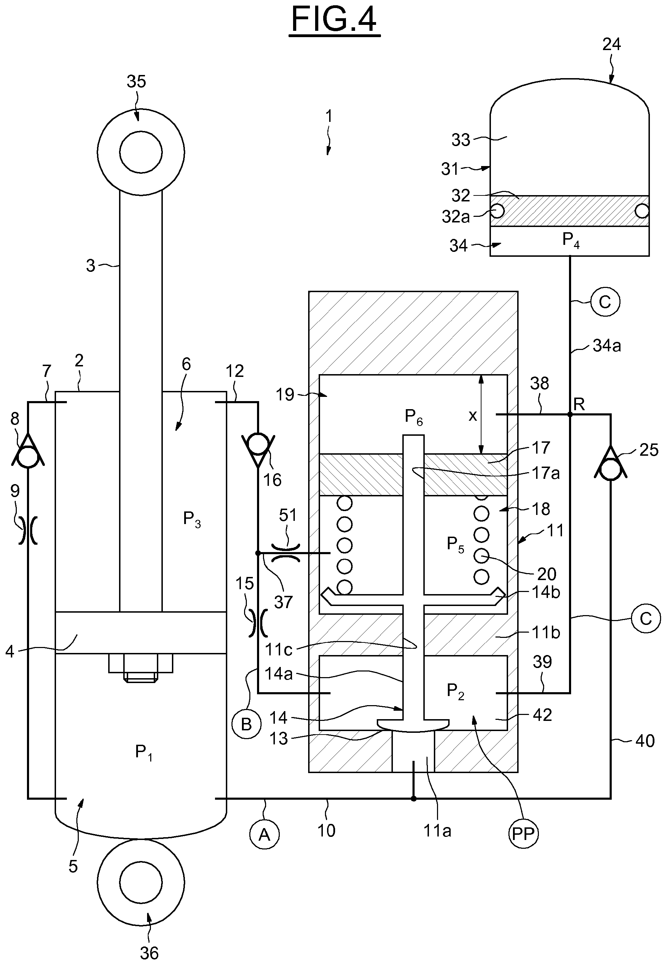

Un second mode de réalisation de l'amortisseur 1 est visible en figure 4 sur laquelle les éléments identiques portent les mêmes références. On retrouve sur la figure 4 en particulier la restriction de commande 15 disposée de la même manière dans le circuit B. Toutefois, dans le mode de réalisation de la figure 4, le freinage du déplacement du piston de valve 17 n'est plus obtenu par un piston de freinage mais par une restriction de filtrage 51 disposée sur la conduite 37, reliant la première chambre de valve 18 au circuit B.

Par les conduites 38, 39 et 40, la pression dans la seconde chambre de valve 19 et celle dans la chambre de soupape 42 de la valve 11 sont toutes deux égales à la pression P4 du réservoir 24. En conservant les mêmes notations de pression que celles de la figure 3, on peut écrire la relation : P2 = P4 = P6.

Le fonctionnement en détente est le même que dans le premier mode de réalisation.

Lors du fonctionnement en compression, le fluide chassé de la première chambre principale 5 emprunte la première conduite de compression 10 et l'orifice d'entrée 11a de la valve 11. Le fluide hydraulique est freiné par la soupape mobile 14 puis se divise en un premier flux qui rejoint la seconde chambre principale 6 en traversant la restriction de commande 15 et un second flux qui rejoint le réservoir de fluide hydraulique 24.

La deuxième chambre de valve 19 est soumise à une pression P6 égale à la pression P4 du réservoir. La première chambre de valve 18 est reliée via la restriction de filtrage 51 à la deuxième chambre principale 6 soumise à la pression P3. La restriction de filtrage 51 engendre alors une chute de pression P5 - P3. Les pressions P2 et P5 sont donc appliquées aux deux faces du piston de valve 17, qui comprime le ressort 20.

La restriction de filtrage 51, disposée sur la conduite 37 permet de filtrer la force d'amortissement de la même manière que le piston auxiliaire 21 et la restriction23 de la figure 3.

En effet, les équations (1) et (3) définissant la force FR exercée par le ressort sont inchangées, l'équation (2) est remplacée par l'équation :

$$(2') \ FR = (P2 - P3).SC - (P5 - P3).SC$$

Or, la chute de pression (P5 - P3) est proportionnelle à la vitesse de déplacement du piston de valve 17, ce qui se traduit par l'expression : P5 - P3= A'/SC.dx/dt où A' est un coefficient de proportionnalité, ce qui permet d'écrire :

$$(2') \ FR = (P2 - P3).SC - A'.dx/dt$$

Les trois équations (1), (2'), et (3) sont strictement comparables aux équations (1), (2), et (3) résultant du mode de réalisation de la figure 3 et qui ont permis de démontrer que la partie principale F1 de la force d'amortissement FA était filtrée par un filtre passe-bas de premier ordre.

Le même calcul peut être fait chaque fois que l'on dispose une restriction de filtrage sur un conduit reliant une des chambres de valve à l'un quelconque des circuits A, B, ou C. Toute restriction disposée sur tel circuit, est apte à assurer le filtrage de la force d'amortissement.

Dans la pratique, la chute de pression générée par une restriction de filtrage n'est pas strictement proportionnelle au débit qui la traverse. Le filtrage du premier ordre est une approximation, assez exacte, du processus qui permet d'éliminer les fréquences hautes de la loi d'amortissement.

De la même façon que dans l'exemple de la figure 3, la différence de pression engendrée par la restriction de commande 15 ainsi que la poussée exercée par le ressort 20 permettent ainsi de contrôler la fermeture de la soupape 14 qui freine le passage du fluide.

La force d'amortissement, qui dépend de la fermeture de la soupape mobile 14, peut donc faire l'objet des mêmes calculs que ceux établis dans le premier mode de réalisation. La force d'amortissement est également la somme de deux termes, dont l'un est petit devant l'autre, un filtre passe-bas du premier ordre et proportionnel à la différence de pression (P2 - P3) générée par la restriction de commande 15 étant appliqué au terme le plus important de la force d'amortissement.

Cet amortisseur permet donc la même amélioration de la réponse à une perturbation.

De même que pour la restriction de commande 15, on peut envisager d'utiliser une restriction de filtrage à caractéristique pilotable. Cela permet d'ajuster la caractéristique de l'amortisseur en fonction de paramètres autres que la vitesse de compression, tels que la vitesse du véhicule.

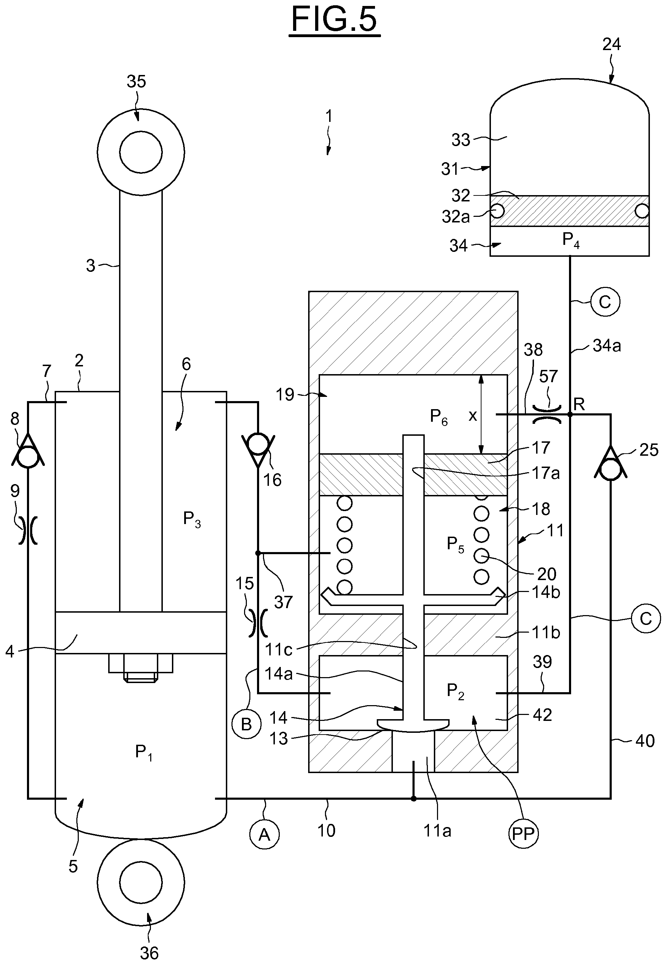

La figure 5 sur laquelle les éléments identiques portent les mêmes références est une variante du second mode de réalisation, différent de celui-ci par la position de la restriction de filtrage.

Une restriction de filtrage 57 est en effet montée sur la conduite 38 reliant la deuxième chambre de valve 19 au circuit C, tandis que la valve 11 est toujours montée sur le circuit A, et la restriction de commande 15 sur le circuit B.

Dans cette variante, on a donc : P4 = P2 et P5 = P3.

Le fonctionnement en détente est le même que dans les cas des figures 3 et 4.

Lors d'un fonctionnement en compression, le fluide chassé de la première chambre principale 5 est freiné par la soupape mobile 14, créant la chute de pression P1 - P2. Une partie du flux de fluide s'écoule à travers la restriction de commande 15, créant la chute de pression P2 - P3, et rejoint la deuxième chambre principale 6.

La première chambre de valve 18 est soumise à une pression P5 égale à la pression P3 de la deuxième chambre principale 6. La deuxième chambre de valve 19 est reliée via la restriction de filtrage 57 au réservoir de fluide hydraulique 24 par le point de connexion R. La restriction de filtrage 57 engendre une chute de pression P2 - P6. Les pressions P3 et P6 sont donc appliquées aux deux faces respectives du piston de valve 17, qui comprime le ressort 20.

De la même façon que dans l'exemple de la figure 4, la différence de pression agissant sur la soupape mobile 14 est obtenue à partir de la restriction de commande 15 et de la restriction de filtrage 57 communicant avec l'une des chambres de valve (en l'espèce la chambre de valve 19).

La force d'amortissement comprend donc un terme dominant filtré par un filtre passe-bas du premier ordre et proportionnel à la différence de pression (P2 - P3) générée par la restriction de commande 15.

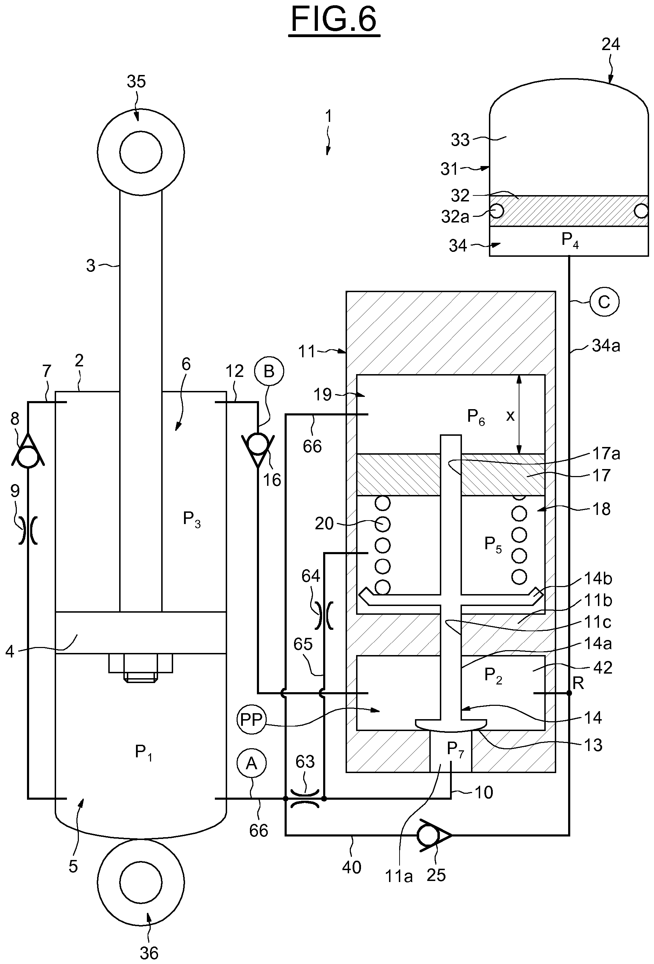

La figure 6 sur laquelle les éléments identiques portent les mêmes références représente une deuxième variante du second mode de réalisation, illustrant une nouvelle position de la restriction de commande.

L'amortisseur illustré sur la figure 6 se différencie de l'amortisseur de la figure 4, par le fait que la restriction de commande 63 est montée sur la conduite 10 dans l'écoulement du fluide entre la première chambre principale 5 et la chambre de soupape 42 de la valve 11, c'est-à-dire sur le circuit A comme la valve elle-même.

Une conduite 65 relie l'orifice d'entrée 11a de la valve et la première chambre de valve 18. Une conduite 66 est disposée entre la première chambre principale 5 et la seconde chambre de valve 19.

La conduite 65 est munie d'une restriction de filtrage 64. Du fait de l'absence de restriction sur la deuxième conduite de compression 12, la deuxième chambre principale 6 est soumise en compression à la pression statique P4 du réservoir de fluide hydraulique 24. En d'autres termes, on a : P3 = P4

On a les relations : P3 = P4 = P2 et P6 = P1. On définit une nouvelle pression P7 à l'entrée 11a de la valve.

Lors d'un fonctionnement en compression, le fluide chassé de la première chambre principale 5 s'écoule à travers la restriction de commande 63, créant la chute de pression P1 - P7. Le fluide arrive ensuite à l'entrée de la valve 11 à la pression P7. Il est alors freiné par la soupape mobile 14 créant la chute de pression P7 - P2.

La première chambre de valve 18 est reliée via la restriction de filtrage 64 à l'orifice d'entrée 11a de la valve 11, soumis à la pression P7. La restriction de filtrage 64 engendre alors une chute de pression P5 - P7. La deuxième chambre de valve 19 est soumise à une pression P6 égale à la pression P1 de la première chambre principale 5. Les pressions P1 et P5 sont donc appliquées aux faces respectives du piston de valve mobile 17, qui comprime le ressort 20.

De la même façon que dans les exemples précédents, la différence de pression agissant sur la soupape mobile 14 est obtenue à partir d'une restriction de commande 63 et d'une restriction de filtrage 64 communicant avec l'une des chambres de valve (en l'espèce la première chambre de valve 18).

Ainsi, dans cette variante également, la force d'amortissement est filtrée par un filtre passe-bas du premier ordre et proportionnelle à la différence de pression (P1 - P7) générée par la restriction de commande 63, montée en amont de la valve 11.

Le fonctionnement en détente est le même que dans les cas des figures 3, 4 et 5.

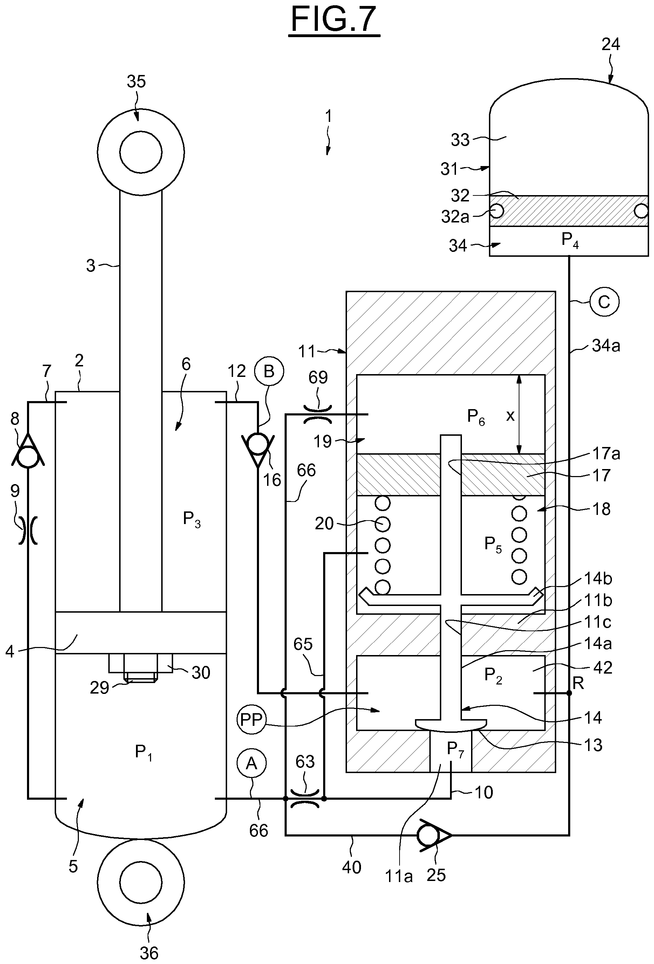

La figure 7 sur laquelle les éléments identiques portent les mêmes références représente une troisième variante de ce second mode de réalisation. L'amortisseur illustré sur la figure 7 se différencie de l'amortisseur de la figure 6 par le fait que la restriction de filtrage 69 est montée sur la conduite 66 reliant la seconde chambre de valve 19 au circuit A. La restriction de filtrage entraîne une chute de pression P1 - P6.

Dans cet exemple, on a en compression : P5 = P7 et P3 = P4 = P2.

Les pressions P6 et P7 sont donc appliquées aux faces respectives du piston de valve mobile 17, qui comprime le ressort 20.

De la même façon que dans les exemples précédents, la différence de pression agissant sur la soupape mobile 14 est obtenue à partir d'une restriction de commande 63 et d'une restriction de filtrage 69 communiquant avec l'une des chambres de valve.

Ainsi, dans cette variante également, la force d'amortissement est filtrée par un filtre passe-bas du premier ordre et proportionnelle à la différence de pression (P1 - P7) générée par la restriction de commande 63.

Les figures 4, 5, 6 et 7 illustrent donc quatre variantes du second mode de réalisation d'un amortisseur présentant une amélioration de la réponse à une accélération de la roue. Dans les quatre variantes, la valve placée dans le circuit A entre la première chambre principale 5 et la deuxième chambre principale 6, freine l'écoulement du fluide au moyen d'une soupape mobile dont l'ouverture dépend de la différence entre deux pressions. Ces deux pressions sont obtenues au moyen :

- d'une restriction de commande montée sur l'un des circuits A (figures 6 et 7) ou B (figures 4 et 5), et
- d'une restriction de filtrage, montée sur un conduit reliant une des chambres de valve à l'un des circuits A (figures 6 et 7), B (figure 4) ou C (figure 5).

En variante, on peut également monter la restriction de commande sur le circuit C, à condition d'en relier l'entrée à la seconde chambre de valve 19, et la sortie à la première chambre de valve 18. La restriction de filtrage est alors disposée indifféremment sur le conduit reliant la première chambre de valve au circuit C ou sur le conduit reliant la seconde chambre de valve au circuit C.

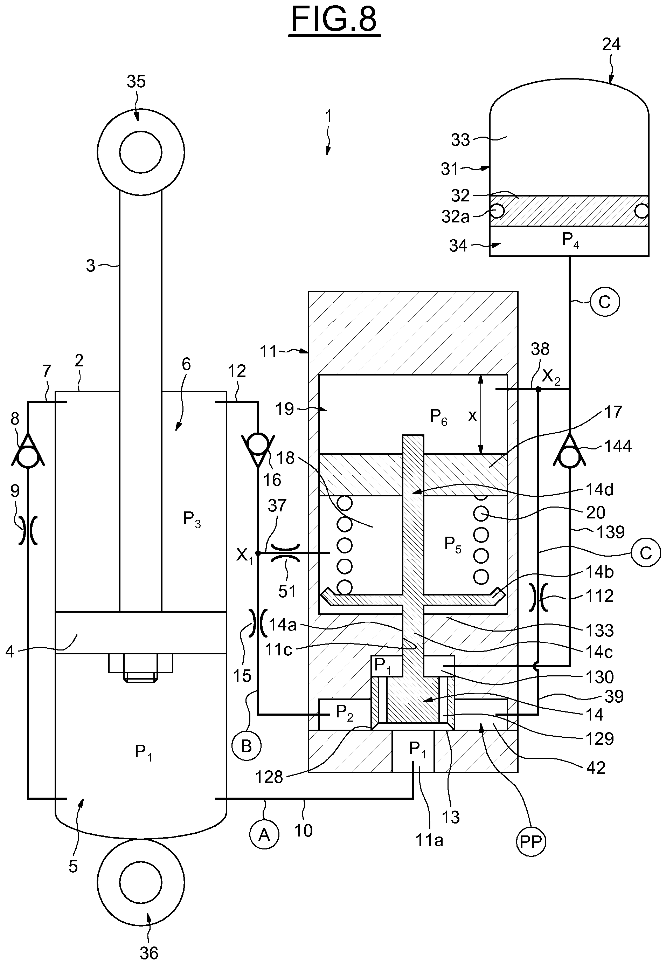

La figure 8 illustre un exemple d'amortisseur selon un troisième mode de réalisation avec une valve de commande et deux restrictions de commande de caractéristiques différentes. Un tel amortisseur permet de contrôler plus finement la force d'amortissement en réponse à une perturbation.

Les conduites 10 (circuit A), 12 (circuit B) et 39 (circuit C) relient la valve 11 respectivement à la première chambre principale 5, à la seconde chambre principale 6 et à la chambre de réservoir 34, le point de partage PP étant situé dans la chambre 42. La conduite 37 relie la première chambre de valve 18 à un point X1 de la conduite 12 et la conduite 38 relie la deuxième chambre de valve 19 à un point X2 de la conduite 39. La soupape 14 peut se déplacer dans une chambre supplémentaire 130 reliée au réservoir 34 par une conduite 139. La conduire 139 est munie d'un clapet anti-retour 144 disposé de telle sorte qu'il ne laisse passer le fluide hydraulique que lors du fonctionnement en détente de l'amortisseur.

La soupape 14 comporte plusieurs conduits axiaux traversants 129 dont deux sont visibles sur la vue en coupe de la figure 8. Le fluide provenant de la première chambre principale 5 peut traverser les conduits axiaux 129 et pénétrer dans la chambre supplémentaire 130. De cette manière, la soupape 14 est soumise à la même pression sur sa section inférieure dans la chambre de soupape 42 et sur sa section supérieure dans la chambre supplémentaire 130. Finalement, cette pression P1 ne s'applique que sur la section de la tige 14a. Cela diminue la force devant être mise en œuvre par le ressort 20 pour engendrer son déplacement, par rapport aux exemples précédents.

Grace à cette forme particulière de la soupape 14, on connaît de façon très précise la surface de la soupape 14 soumise à la résultante des forces de pression P1 de l'orifice d'entrée 11a et de la chambre supplémentaire 130 de la valve 11. En effet, la pression P1 s'applique sur la différence entre la surface inférieure et la surface supérieure de la soupape 14. Cette différence est une surface constante : la surface de la section de la tige 14a. Il n'est pas forcément aussi facile de connaître cette surface pour les autres géométries de soupape. En particulier, dans une soupape mobile telle que celle du premier mode de réalisation illustré sur la figure 3, au moment où la soupape décolle de son siège, des forces hydrauliques tendant à l'ouvrir davantage peuvent apparaître à l'extérieur de la zone de contact, et rendre variable la section sur laquelle s'applique la pression P1 de l'orifice d'entrée 11a.

La valve 11 comprend une première restriction de commande 15 montée sur la conduite 12, entre le point de partage PP et le point X1 et une deuxième restriction de commande 112 montée sur la conduite 39 entre le point de partage PP et le point X2. La deuxième restriction de commande 112 présente de préférence des caractéristiques différentes de celles de la première restriction de commande 15. Une restriction de filtrage 51 est montée sur la conduite 37. Ainsi, la valve de commande 11 se situe sur le circuit A, la première restriction de commande 15 étant sur le circuit B, et la deuxième restriction de commande 112 étant sur le circuit C.

Les pressions dans les chambres de valve 18 et 19 sont notées comme sur la figure 2, P5 et P6, et la pression dans la chambre de soupape 42 est notée P2. On note que les conduites et les restrictions impliquent l'égalité suivante : P6 = P4.

Le fluide chassé de la première chambre principale 5 lors d'une compression emprunte la conduite 10 puis est freiné par la soupape 14, qui entraine la chute de pression P1 - P2. Une grande partie du flux est dirigée vers la deuxième chambre principale 6, traversant la première restriction de commande 15, qui entraine la chute de pression P2 - P3. L'autre partie rejoint le réservoir 24 en traversant la deuxième restriction de commande 112, qui entraine la chute de pression P2 - P4. La restriction de filtrage 51 engendre la chute de pression P5 - P3.

De cette manière, le piston de valve mobile 17 est soumis à la pression P5 tendant à le déplacer vers le haut et à la pression P6 tendant à le déplacer vers le bas (par rapport à la figure 8).

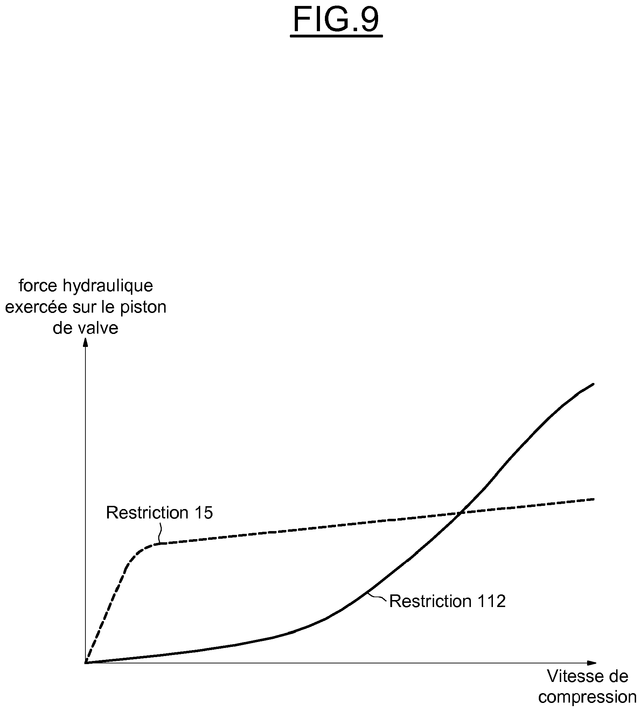

On a représenté en figure 9 les courbes de variations des forces hydrauliques exercées sur les faces du piston de valve mobile 17 en fonction de la vitesse du mouvement de compression de l'amortisseur. Ces forces dépendent de la chute de pression occasionnée par les restrictions 15 et 112 dont les caractéristiques sont différentes. Elles dépendent aussi de la différence des débits qui les traversent, les débits des circuits A, B, et C étant différents. Ces forces hydrauliques dépendent enfin de la valeur des surfaces du piston 17. Dans l'exemple de la figure 8, les deux surfaces opposées du piston 17 sont égales. Pour obtenir l'effet désiré, la restriction 15 est de préférence conçue pour générer une chute de pression importante aux vitesses de compression très faibles. Quand la vitesse de compression augmente, la chute de pression continue de croître mais très faiblement. Il en résulte pour la force hydraulique, la courbe en pointillés de la figure 9. On peut à cet égard utiliser un clapet plaqué sur son siège par un ressort, sans passage libre ou avec des passages libres réduits. La restriction 112 est de préférence conçue pour créer une chute de pression négligeable aux vitesses de compression faibles et croissant significativement lorsque la vitesse augmente, de manière à ce que la force hydraulique qu'elle génère dépasse celle générée par la restriction 15 à partir d'une certaine vitesse de compression. Il en résulte pour la force hydraulique, la courbe en trait plein de la figure 9. La restriction 112 peut comporter des passages libres importants, destinés à saturer progressivement lorsque la vitesse de compression, donc le débit, augmentent. La restriction 112 peut comporter en outre un limiteur de pression, de manière à éviter, à très forte vitesse de compression, d'atteindre des chutes de pression trop importantes.

Aux basses vitesses de compression, le débit traversant les restrictions est faible. La pression hydraulique dans la chambre 19, compte tenu de la caractéristique de la restriction 112, est peu différente de la pression régnant au point de partage, tandis que la pression dans la chambre 18, compte tenu de la caractéristique de la restriction 15, lui est très inférieure. Sous l'action de ces deux pressions, le piston 17 comprime le ressort 20 et ferme la soupape 14. Aux vitesses de compression plus élevées, la différence entre la pression au point de partage et la pression de la chambre 19 augmente plus vite que la différence entre la pression au point de partage et la pression de la chambre 18. Sous l'action de ces deux pressions, le piston 17 remonte, l'effort exercé sur le ressort 20 est réduit et la soupape 14 remonte.

Ainsi, au moyen des deux restrictions de commande 15 et 112, disposées comme illustré sur la figure 8, et de caractéristiques différentes telles qu'indiqué ci-dessus, on dispose d'un amortisseur à force d'amortissement importante, pour une vitesse de compression faible, et à force d'amortissement faible, pour une vitesse de compression élevée.

Dans l'exemple de la figure 8, la valve 11 est disposée sur le circuit A. La première restriction de commande 15 est sur le circuit B, et la restriction de filtrage 51 sur le conduit 37 reliant la chambre de valve 18 au circuit B, tandis que la deuxième restriction de commande 112 est disposée sur le circuit C. On pourrait obtenir le même résultat, au moyen de deux restrictions de commande, disposées au plus près du point de partage PP, l'une sur le circuit B, l'autre sur le circuit C, la pression à l'entrée des deux restrictions étant celle du point de partage. La première chambre de valve 18 serait reliée à la sortie de la restriction ayant une caractéristique semblable à celle de la restriction 15, et la seconde chambre de valve 19 à la sortie de la restriction ayant une caractéristique semblable à celle de la restriction 112.. Le filtrage peut être indifféremment assuré, par un piston de freinage 21 comme sur la figure 3, ou par une restriction de filtrage disposée sur l'un des conduits reliant l'une des chambres de valve à l'une des restrictions de commande.

On notera que la valve de commande 11 peut être disposée indifféremment sur le circuit A, ou le circuit B, ou le circuit C.

Par ailleurs, la soupape 14 de l'amortisseur de la figure 8 comprend à sa base un anneau de contact formant une excroissance périphérique 128. Lorsque la soupape 14 est levée, le fluide pénètre dans la chambre de soupape 42 en passant entre la surface de contact du siège 13 et l'excroissance 128. Une fois l'excroissance 128 franchie, la soupape 14 ne présente au fluide que des surfaces parallèles à l'axe de la tige 14a. Les fluctuations locales de pression n'engendrent aucune composante de force parallèle à l'axe précité et donc susceptibles d'ouvrir ou de fermer la soupape. Celle-ci ne vibre donc pas.

Dans cet exemple, le diamètre de l'anneau de contact 128 (20 à 25mm) est plus grand que le diamètre de l'orifice d'entrée 11a de la valve 11. Ainsi pour un même soulèvement de la soupape 14, la section de passage pour le fluide est significativement plus grande.

Au cours de la phase de détente, les conduits 129 traversant la soupape 14 peuvent être utilisés pour réalimenter la première chambre principale 5 à partir du réservoir 24. La très légère perte de pression du fluide franchissant les conduits axiaux 129 suffit à entrainer la soupape 14 contre son siège 13, et donc à la remettre rapidement dans sa position de début de compression. La remise en position rapide de la soupape lors d'une détente permet d'éviter des à-coups de la force d'amortissement au début d'une compression.

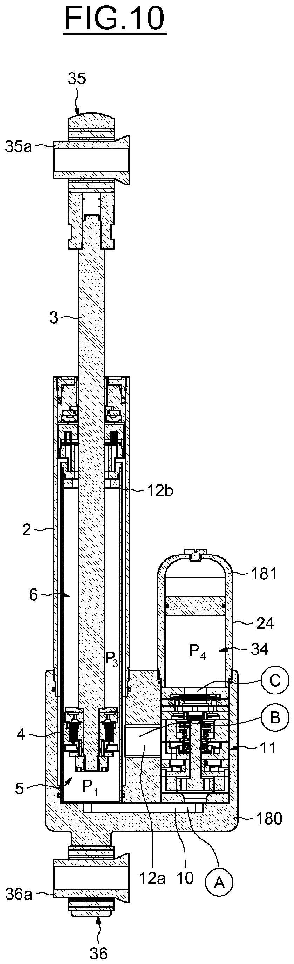

La figure 10 est une vue en coupe longitudinale d'un amortisseur de l'invention selon un mode de réalisation pratique. Les pièces similaires portent les mêmes références que sur les figures précédentes.

On distingue sur cette vue en coupe deux parties distinctes, maintenues solidaires par un carter 180. La première partie est le corps de l'amortisseur, comprenant le cylindre 2, la tige 3, le piston principal 4, la première chambre principale 5 et la seconde chambre principale 6. A l'extrémité de la tige 3 se trouve le premier anneau 35 dans lequel est introduite une barre de liaison 35a de la caisse du véhicule. A l'extrémité opposée, sur le carter 180, se trouvent le second anneau 36 et une barre de liaison 36a liée à une roue du véhicule.

Le carter 180 maintient en position un deuxième ensemble constitué de la valve 11 et du réservoir hydraulique 24, présentant un couvercle de carter 181. Le réservoir 24 est disposé près de la valve 11, de telle sorte que la chambre de réservoir 34 est adjacente à la valve 11.

On a également représenté sur la figure 10 la conduite 10 qui relie la valve 11 à la première chambre principale 5. La valve 11 est reliée à la seconde chambre principale 6 par une première partie de conduite 12a entre la valve 11 et le cylindre d'amortisseur 2, et une deuxième partie de conduite 12b qui correspond à une zone annulaire intermédiaire disposée à l'intérieur de la paroi du cylindre d'amortisseur 2.

Les pressions dans les chambres principales 5 et 6 sont notées comme sur la figure 8, P1 et P3. La pression dans la chambre 34 du réservoir hydraulique 24 est notée P4.

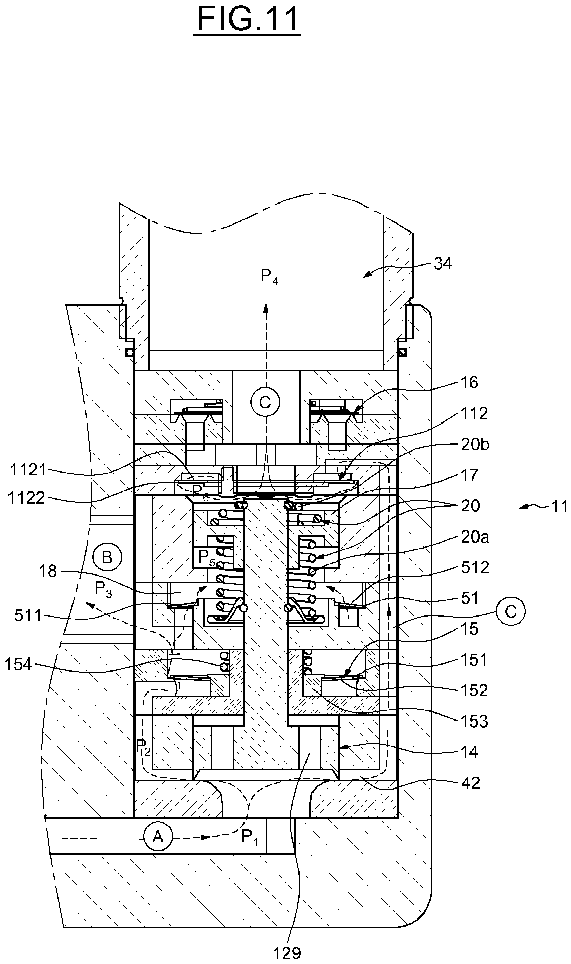

La figure 11 montre une vue agrandie en coupe selon deux plans différents de la valve de commande 11 de ce mode de réalisation. La valve 11 est constituée d'un ensemble de pièces cylindriques, maintenues en pression les unes contre les autres à l'aide de gougeons non représentés traversant toute la valve.

Les coupes de la figure 11 ont été effectuées de façon à montrer les passages mis en jeu au cours d'une compression. L'écoulement du liquide hydraulique lors d'une compression a été représenté en pointillés.

Sur le coté gauche de la figure on voit que le liquide hydraulique provenant de la première chambre principale 5 de l'amortisseur et s'écoulant dans le circuit A, traverse successivement la soupape 14, la restriction de commande 15 puis la restriction de filtrage 51 avant de pénétrer dans la première chambre de valve 18. La restriction 15 comprend un clinquant 151 comportant un très petit nombre d'orifices 152 de petit diamètre, maintenu en précontrainte sur son siège par un piston 153 poussé par un ressort 154. Cette disposition permet d'obtenir la courbe en pointillés de la figure 9. La restriction de filtrage 51 comporte un clinquant 511 maintenu sur son diamètre extérieur, percé de passages libres 512, et en très légère précontrainte sur son appui intérieur. Ainsi, quand le ressort 20 se comprime et que la force d'amortissement augmente, seuls les passages libres 512 permettent l'écoulement du fluide, tandis que lors de la détente du ressort 20, le fluide peut également passer entre l'appui intérieur et le siège du clinquant 511. Cela permet d'avoir un filtrage asymétrique.

Il peut en effet être souhaitable d'introduire une asymétrie dans le filtrage, en freinant plus l'écoulement du fluide dans un sens que dans l'autre, ceci pour des raisons diverses liées à l'utilisation du véhicule sur lequel est monté l'amortisseur. Dans le cas d'une automobile de tourisme on constate par exemple qu'il est préférable de plus filtrer l'accroissement de la force d'amortissement en compression, que sa diminution.

On remarque également que le ressort de valve 20 est constitué de deux ressorts 20a et 20b en opposition pour avoir plus de linéarité de réponse autour du zéro.

Sur la partie droite de la coupe de la figure 11, on voit que le fluide hydraulique provenant de la première chambre principale 5 de l'amortisseur, traverse la soupape 14, et passe par le circuit C qui mène à la restriction de commande 112 et au réservoir 34.

La restriction 112 comporte des passages libres importants 1121 et un clinquant 1122 limiteur de pression.

On peut également envisager un mode de réalisation analogue à celui de la figure 10 dans lequel on remplace le réservoir 34 disposé sous le couvercle 181 par un réservoir cylindrique entourant le cylindre 2, un conduit correspondant au circuit C pratiqué dans le bloc 180 reliant la partie haute de la valve 11 à l'enveloppe servant de réservoir.

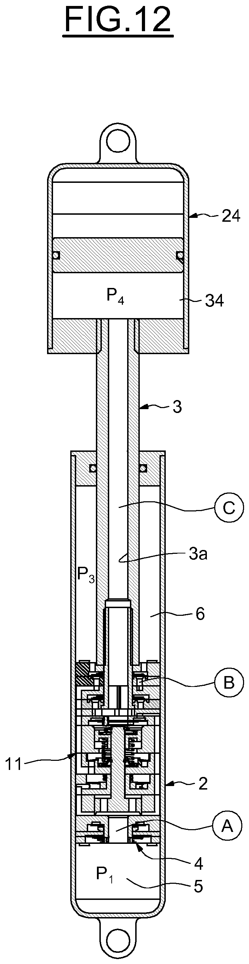

On a représenté sur la figure 12 une vue en coupe d'un amortisseur selon un deuxième exemple de réalisation pratique. Celui-ci est plus compact que l'amortisseur de la figure 10 puisque tous les éléments de l'amortisseur sont compris dans le cylindre ou sur la tige. Les éléments similaires portent les mêmes références que sur les figures précédentes.

Le cylindre 2, la tige 3, le piston 4 délimitant les chambres 5 et 6 sont représentés. La valve 11 est incorporée à l'intérieur du piston 4. Le réservoir de fluide hydraulique 24 est monté à l'extrémité de la tige 3 opposée au piston 4. La valve 11 communique avec la chambre de réservoir 34 au moyen d'une conduite 3a à l'intérieur de la tige 3, qui est donc une tige creuse. L'avantage d'une telle disposition est que l'ensemble est plus compact, facilitant l'implantation d'un tel amortisseur au sein, par exemple, d'un véhicule automobile.

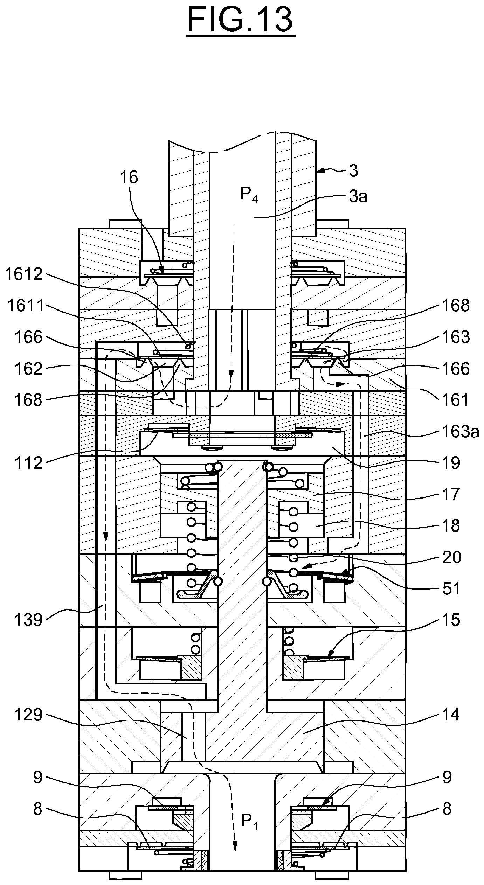

La figure 13 montre une vue agrandie en coupe selon deux plans différents de la valve de commande 11 de cet exemple de réalisation pratique. On retrouve notamment la restriction de filtrage 51 assurant un filtrage asymétrique. Les éléments identiques à ceux de la figure 11 portent les mêmes références. Les coupes de la figure 13 ont été effectuées de façon à montrer les passages du fluide hydraulique au cours de la détente entraînant le retour de la soupape 14 sur son siège, et la suppression de la contrainte du ressort de valve 20. On notera que le schéma hydraulique est le même pour le premier exemple de la figure 10, les coupes de la figure 11 représentant les circuits de compression, et pour le second exemple de la figure 12, les coupes de la figure 13 représentant les circuits contribuant au retour en position de repos de la soupape 14 et du piston 17.

En d'autres termes, le fonctionnement hydraulique, en compression comme en détente, est le même dans les deux modes de réalisation des figures 10 et 11 d'une part et 12 et 13 d'autre part.

Au cours de la détente, le réservoir fournit à la première chambre 5 le fluide nécessaire pour compenser la variation du volume immergé de la tige 3. Comme illustré sur la figure 13 sur laquelle l'écoulement du fluide lors de la détente est représenté en pointillés, le fluide provenant du réservoir traverse la tige creuse 3a et arrive dans les canaux d'une pièce 161 qui fait partie d'un clapet anti-retour comportant un clinquant 1611 maintenu appuyé contre la pièce 161 par un ressort 1612. Le fluide hydraulique soulève le clinquant 1611 et par le canal 139 représenté sur le côté gauche de la vue en coupe, atteint la soupape 14 qu'il traverse par les canaux 129 avant de rejoindre la première chambre 5 de l'amortisseur. Ainsi la soupape 14 est entraînée contre son siège. En soulevant le clinquant anti-retour 1611, le fluide ouvre d'autres canaux de la pièce 161, ce qui permet au fluide hydraulique de se diriger vers la première chambre 18 de la valve. Le piston 17 remonte alors, et le ressort 20 se détend.

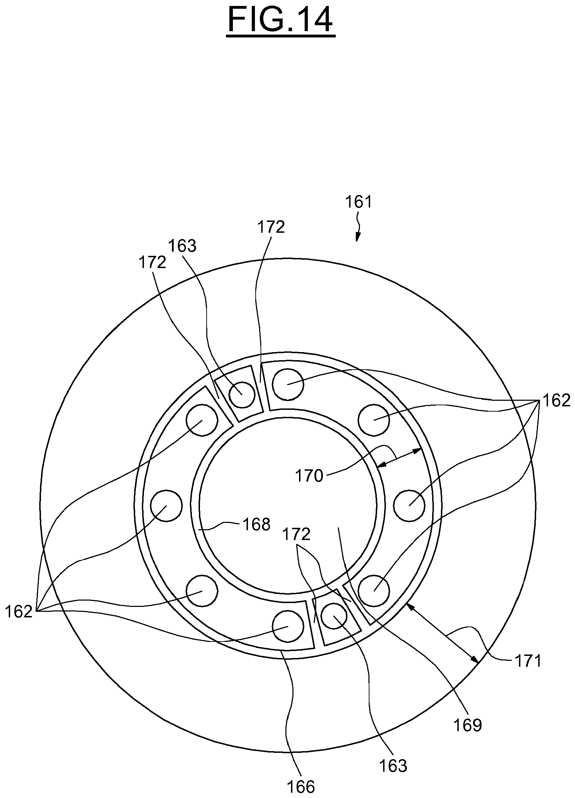

La figure 14 représente une vue de dessus de la pièce 161, sans le clinquant 1611. On notera que la pièce 161 avec le clinquant 1611 remplace le clapet anti-retour 25 de l'amortisseur des figures 3 à 7, ou le clapet anti-retour 144 de l'amortisseur de la figure 8. La pièce 161 permet d'améliorer la réponse à une perturbation. En effet, à la fin d'un mouvement de compression, si la chaussée présente une dénivellation négative, l'amortisseur fonctionne en mode détente. Dans les exemples d'amortisseurs précédents tels que celui de la figure 4, le ressort 20 peut être encore comprimé à cause de la restriction de filtrage 51 qui freine les mouvements du piston de valve 17. Au cours de la détente, la valve 11 étant isolée par le clapet anti-retour 16 de la seconde conduite de compression 12, cela ne perturbe pas le fonctionnement. A l'intérieur de la valve, le ressort 20 tend à repousser le piston de valve 17, ce qui exige un transfert de fluide hydraulique entre les chambres de valve 18 et 19. Ce transfert est freiné par la restriction de commande 15 Et par la restriction de filtrage 51. Finalement, il est possible qu'en fin de détente le déplacement souhaité du piston de valve 17 ne soit pas terminé.

Pour faciliter ce retour aux conditions initiales, on utilise avantageusement la pièce 161 représentée sur la figure 14.

Dans l'exemple illustré, la pièce 161 comprend une gorge annulaire 170 délimitant sur son contour intérieur un alésage 169. La gorge annulaire 170 est entourée à l'extérieur par une zone annulaire plate 171. L'alésage 169 permet le montage autour de la tige 3 comme on peut le voir sur la figure 13. La zone annulaire plate 171 permet le serrage de la pièce 161 avec les autres pièces constitutives de la valve 11. Le ressort 1612 (figure 13) vient plaquer le clinquant 1611 contre les bords de la gorge annulaire 170.

Dans la gorge annulaire 170 sont répartis circulairement des orifices 162, au nombre de huit dans l'exemple illustré, reliés chacun au réservoir de fluide hydraulique 24. Deux autres orifices 163 sont disposés dans la gorge 170, à l'extrémité de conduites 163a communiquant avec la première chambre 18 de la valve 11. Des nervures radiales 172 sont disposées dans la gorge 170 de chaque côté des orifices 163 de manière à isoler les orifices 163 des orifices 162. Des nervures circulaires extérieure 166 et intérieure 168 complètent l'isolation entre les orifices 162 et les orifices 163.

Le clinquant d'acier 1611 en forme d'anneau, visible sur la figure 13, est maintenu contre la pièce 161 par le ressort 1612 (figure 13).

Pendant la compression, la pression régnant dans la première chambre principale 5 complète l'action du ressort 1612 pressant le clinquant 1611 sur la pièce 161 et obturant tous les orifices 162 et 163. Ainsi la première chambre principale 5, la première chambre de valve 18 et le réservoir 24 de fluide hydraulique sont isolés les uns des autres.

Pendant la détente, le fluide hydraulique provenant du réservoir 24 passant par les orifices 162 de bas en haut sur la figure 13 se dirige vers la première chambre principale 5 et soulève le clinquant 1611 appuyé sur les nervures 166 et 168 qui délimitent la gorge annulaire 170. Le soulèvement du clinquant 1611 permet de faire passer du fluide hydraulique à la pression du réservoir par les orifices 163 qui communiquent avec la première chambre de valve 18. La pression dans cette dernière diminue. Il en résulte une détente du ressort 20.

On peut envisager un exemple d'amortisseur en tout point identique aux modes de réalisation précédents, dans lequel une telle pièce 161 est incorporée, en lieu et place du clapet anti-retour 25 ou 144 de l'amortisseur.

Finalement, la pièce 161 peut assurer simultanément plusieurs fonctions :

- pendant la détente, elle permet au fluide hydraulique contenu dans le réservoir 24 d'entrer dans la première chambre principale 5 pour compenser les variations du volume immergé de la tige 3 de l'amortisseur (ce qui est le rôle d'un clapet anti-retour d'amortisseur classique),
- pendant la détente, elle permet une libre circulation du fluide hydraulique entre les différentes chambres entourant le piston de valve 17,
- pendant la compression, elle empêche le fluide hydraulique sortant de la première chambre de valve 18 d'aller dans le réservoir 24 (ce qui est le rôle d'un clapet anti-retour d'amortisseur classique), et
- pendant la compression, elle ferme toutes les liaisons entre les chambres de la valve 11.

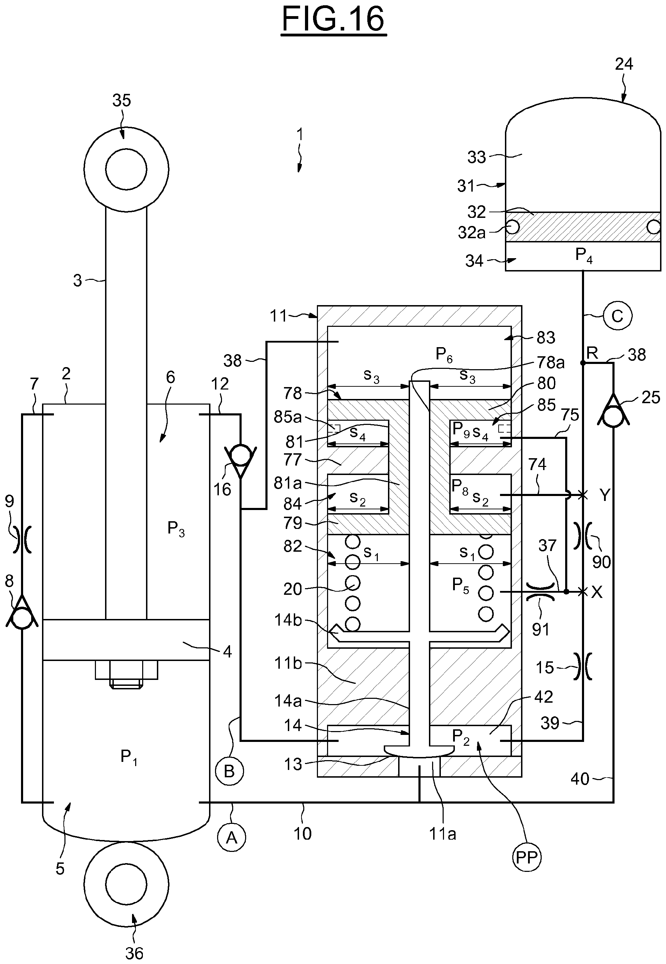

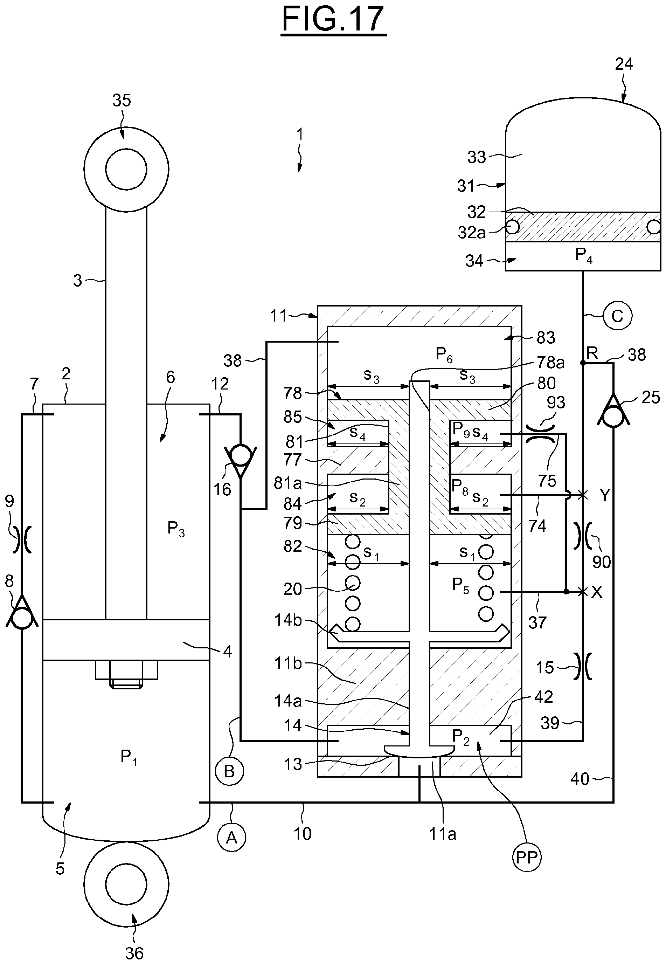

Dans cet exemple, l'action de remplissage de la première chambre de valve 18 suffit pour détendre le ressort 20. On peut toutefois avoir besoin de remplir ou vider, d'autres chambres en contact avec le piston de valve mobile. On peut donc dans d'autres exemples disposer d'autres conduits comparable aux conduits 163, isolés les uns des autres et également des conduits 162 quand le clinquant est en appui sur la gorge annulaire 170, ces autres conduits communicant avec d'autres chambres, par exemple la seconde chambre de valve 19, ,les deux chambres 22a et 22b situées de part et d'autre du piston de freinage 21 de la figure 3 ou encore des chambres auxiliaires telles que la première chambre auxiliaire 84, et la seconde chambre auxiliaire 85 représentées sur les figures 16 et 17.

La pièce 161 peut donc remplacer avantageusement le clapet anti-retour 25 situé sur la conduite 40 reliant le réservoir de fluide hydraulique 24 à la première chambre principale 5, et ce dans n'importe lequel des modes de réalisation précédents.

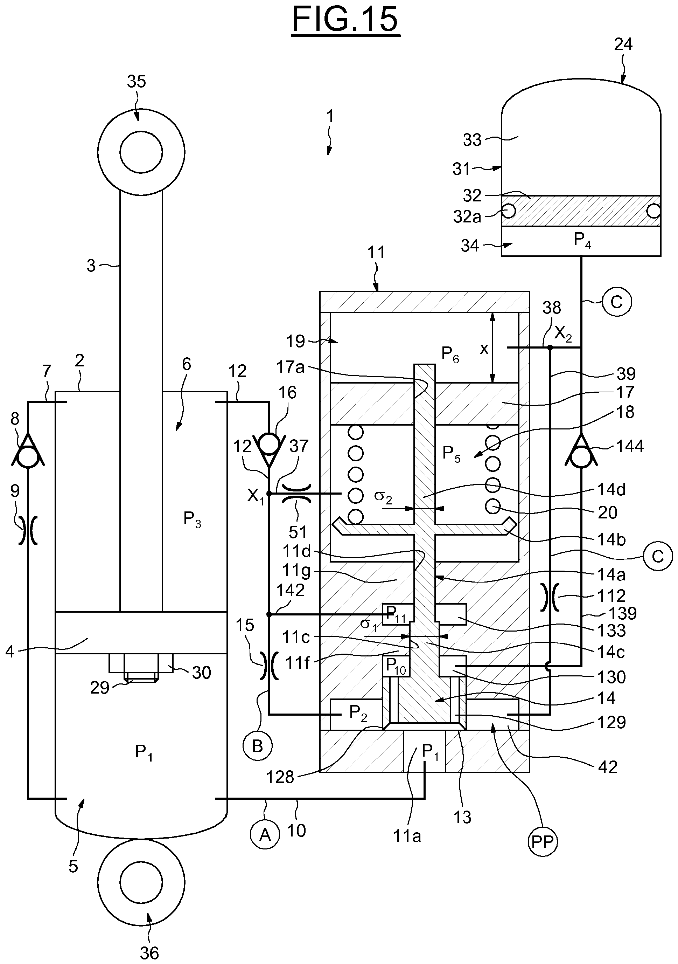

Un quatrième mode de réalisation est illustré sur la figure 15 sur laquelle les éléments identiques portent les mêmes références. Dans ce mode de réalisation, la soupape mobile 14 comporte une tige 14a présentant une première partie de tige 14c, de section $\sigma1$ et une seconde partie de tige 14d, de section $\sigma2$ inférieure à $\sigma1$. La seconde partie de tige 14d est solidaire de l'épaulement 14b en forme de plateau sur lequel s'appuie le ressort 20. Les parties de tige 14c et 14d sont aptes à coulisser dans des alésages respectifs 11c et 11d pratiqués dans deux parois internes 11f et 11g de la valve de commande 11. La soupape 14 est identique à celle de la figure 8. Elle se déplace dans la chambre supplémentaire 130. En outre, dans la valve de commande 11 est pratiquée une seconde chambre supplémentaire 133 en communication avec la conduite 15 du circuit B par une conduite 142, en aval de la restriction de commande 15 lors d'un mouvement de compression.

En plus des pressions P1 à P6 déjà définies pour le mode de réalisation de la figure 8, on définit ici les pressions suivantes :

- la pression P10 est la pression dans la première chambre supplémentaire 130, et
- la pression P11 est la pression dans la deuxième chambre supplémentaire 133.

On a les égalités suivantes : P10 = P1, P11 = P3, et P6 = P4.

Le fluide chassé de la première chambre principale 5 lors d'une compression est freiné par la soupape 14, créant la chute de pression P1 - P2, en pénétrant dans la chambre de soupape 42. Une grande partie du flux est dirigée vers la deuxième chambre principale 6, en traversant la première restriction de commande 15, créant la chute de pression P2 - P3. L'autre partie rejoint le réservoir 24 en traversant la deuxième restriction de commande 112, créant la chute de pression P2 - P4. La restriction de filtrage 51 crée la chute de pression P5 - P3.

De cette manière, la soupape mobile 14 est soumise à trois pressions sur trois sections différentes.

En premier lieu, elle est soumise à la pression P1 du fluide arrivant par l'orifice d'entrée 11a de la valve de commande 11, sur la surface SV de la soupape faisant face à l'orifice 11a et au siège 13. Dans le sens opposé, elle est soumise à la pression P10 du fluide présent dans la première chambre auxiliaire 130, sur une surface égale à la différence de la surface SV et de la surface $\sigma1$ de la première partie de tige 14c. Par ailleurs, les pressions P1 et P10 sont sensiblement égales, grâce aux conduites 129. Finalement, la soupape mobile 14 est soumise à un premier effort vers le haut (par rapport à la figure 15) engendré par une première pression P1, sur une première section équivalente $\sigma1$.

En second lieu, la section $\sigma2$ de la tige 14d de la soupape 14, dans la seconde chambre auxiliaire 133, crée une seconde section ($\sigma1$ - $\sigma2$) sur laquelle s'applique la pression P11 régnant dans la seconde chambre auxiliaire 133, laquelle est égale à la pression P3 grâce à la conduite de communication 142. La soupape mobile 14 est donc soumise à un deuxième effort dirigé vers le bas (par rapport à la figure 15), engendré par la pression P3, sur la section ($\sigma1$ - $\sigma2$).

En troisième lieu, la surface supérieure $\sigma2$ de la seconde partie de tige 14d est soumise à la pression P6 de la deuxième chambre de commande 19, laquelle est égale à la pression P4 du réservoir grâce à la conduite 38. La soupape mobile 14 est donc soumise à un troisième effort dirigé vers le bas (par rapport à la figure 15), engendré par la pression P4, sur la section $\sigma2$.

Finalement, on peut écrire la force hydraulique FY totale appliquée à la soupape 14 :

$$FY = P1.\, \sigma1 - P3.(\, \sigma1 - \sigma2) - P4.\, \sigma2$$

Comme indiqué dans la description de la figure 3, la force d'amortissement s'écrit ;

$$FA = P1.SP - P3.(SP - ST) - P4.ST,$$

où SP est la section du piston principal 4 et ST la section de la tige principale 3.

Si on choisit $\sigma1$ et $\sigma2$ dans le même rapport que SP et ST, on peut obtenir la relation :

$$FA = b.FY,$$

où b est le coefficient de proportionnalité pour passer d'une section du piston principal 4 à la section correspondante de la tige de la soupape 14.

La force d'amortissement est donc, à un coefficient multiplicatif près, égale à la somme des forces hydrauliques agissant sur la soupape 14 ou, ce qui revient au même, à la force exercée par le ressort 20.

Grâce à cette structure étagée de la tige 14a de la soupape 14 et à la structure correspondante de la valve de commande 11, le filtrage porte sur la totalité de la force d'amortissement. Cet arrangement peut être réalisé dans les modes de réalisation précédents.

La figure 16 sur laquelle les éléments identiques portent les mêmes références montre un cinquième mode de réalisation utilisant un piston de valve de structure particulière.

Le piston de valve mobile 78 illustré sur la figure 16 comprend une partie centrale 81a et une gorge 81 située entre deux flasques 79 et 80 identiques. Les flasques 79 et 80 délimitent avec un cloisonnement de séparation 77 de la valve 11, quatre chambres, à savoir :

- une première chambre de valve 82,
- une seconde chambre de valve 83,
- une première chambre auxiliaire 84, et
- une seconde chambre auxiliaire 85.

On désigne la surface S1 comme la surface inférieure du flasque 79, délimitant la première chambre de valve 82. La surface S1 est par ailleurs égale à la surface supérieure S3 du flasque 80, délimitant la deuxième chambre de valve 83. La surface S2 sur laquelle s'exerce la pression régnant dans la première chambre auxiliaire 84 est la surface du flasque 79 de laquelle est soustraite la section de la partie centrale 81a. Cette surface S2 est égale à la surface S4 sur laquelle s'exerce la pression régnant dans la seconde chambre auxiliaire 85.

La première restriction de commande 15 et la deuxième restriction de commande 90 sont montées sur la conduite 39 (circuit C).

On désigne en outre un point X, situé sur la conduite 39 entre les deux restrictions de commande 15 et 90, et un point Y, situé sur la même conduite 39 entre la restriction de commande 90 et le point R.

La conduite 37 relie le point X à la première chambre de valve 82. L'amortisseur comporte en outre une première conduite de liaison 74, reliant le point Y à la première chambre auxiliaire 84, et une seconde conduite de liaison 75, reliant le point X à la seconde chambre auxiliaire 85.

La conduite 37 est munie d'une restriction de filtrage 91.

Ainsi, dans cet amortisseur, la valve de commande 11 est disposée sur le circuit A, tandis que les deux restrictions de commande 15, 90 sont montées sur le circuit C.

La restriction de filtrage 91 est montée sur la conduite reliant la première chambre de valve 82 au circuit C. La deuxième chambre de valve 83 est reliée par une conduite 38 à la conduite 12 en amont du clapet anti-retour 16 sur le circuit B. La pression P6 dans la deuxième chambre de valve 83 est donc égale à la pression P2 régnant dans la chambre de soupape 42.

Dans cet exemple, on définit les nouvelles pressions suivantes :

- la pression P8 est la pression dans la première chambre auxiliaire 84, et
- la pression P9 est la pression dans la seconde chambre auxiliaire 85.

En fonctionnement en compression, on a : P6 = P2 et P8 = P4.

Les deux restrictions 15 et 90 présentent des caractéristiques différentes de façon à obtenir une loi d'amortissement en compression qui, quand la vitesse du mouvement augmente, croit dans un premier temps, atteint un maximum, puis décroit aux vitesses élevées. On peut utiliser à cet égard deux restrictions de commande 15 et 90 ayant des caractéristiques telles que celles qui permettent l'obtention des courbes de la figure 9. La restriction 90 correspond à la restriction 112 de la figure 8.

Le piston de valve mobile 78 est soumis aux forces de pression suivantes qui s'opposent :

- une première force (P2 - P5).S1, tend à faire coulisser le piston vers le bas, et
- une seconde force (P9 - P8).S2, tend à faire coulisser le piston vers le haut.

Aux faibles vitesses de compression, la force hydraulique liée à la différence de pression (P2 - P5) est prépondérante devant la force hydraulique liée à la différence de pression (P9 - P8). La résultante de ces deux forces agit sur le piston 78 de façon à comprimer le ressort 20 et faire croitre la force d'amortissement.

Aux vitesses de compression élevées, les deux forces hydrauliques antagonistes sont plus importantes, mais celle créée par la différence de pression (P9 - P8) est prépondérante devant l'autre, ce qui entraîne la remontée du piston 78, et l'ouverture de la soupape 14. La restriction de filtrage 91, montée sur la conduite 37, c'est-à-dire entre la première chambre 82 et le circuit C, ajoute dans le calcul de la force d'amortissement un terme régi par une équation de filtrage du premier ordre, comme indiqué pour les modes de réalisation précédents. Le terme non filtré est particulièrement faible car les deux chutes de pression à travers les restrictions 15 et 90 qui sont à l'origine de ce terme non filtré, agissent uniquement sur le débit de fluide hydraulique correspondant à la section de la tige 3 de l'amortisseur, qui est petite par rapport à la section du piston principal 4.

Dans ce mode de réalisation, comme dans le mode de réalisation de la figure 3, le déplacement du piston de valve mobile 78 peut être limité par une butée optionnelle de manière à plafonner la force d'amortissement. La butée est placée sur le trajet du piston 78, à l'intérieur d'une des chambres de valve. Comme dans le mode de réalisation de la figure 3, la butée peut être placée dans la première chambre de valve 82. En variante, comme représenté sur la figure 16, la butée 85a en pointillés est placée à l'intérieur de la seconde chambre auxiliaire 85.

Sur la figure 17, on a représenté une variante de l'amortisseur de la figure 16 qui se différencie de l'amortisseur de la figure 16 par le fait que la restriction de filtrage 93 est montée sur la conduite 75 entre la seconde chambre auxiliaire 85 et le circuit C.

L'action des restrictions de commande 15 et 90 sur les mouvements du piston 78, du ressort 20 et de la soupape 14 est identique à ce qui a été décrit pour la figure 16.

La restriction de filtrage 93 est traversée quant à elle par un flux de liquide hydraulique qui ne dépend que du mouvement du piston 78 à l'intérieur de la valve 11. Comme dans les modes de réalisation précédents, la restriction de filtrage 93 introduit un filtrage du premier ordre sur la plus grande partie de la force d'amortissement.

En variante, la restriction de filtrage 93 peut également être montée sur le conduit 74 reliant la première chambre auxiliaire 84 au circuit C.

Les deux restrictions de commande 15 et 90 dont les caractéristiques sont de préférence différentes de façon à obtenir les courbes de la figure 9, peuvent être montées de manière inversée : la restriction 90 peut être proche de la soupape 14 et la restriction 15 plus en aval dans l'écoulement. Il convient alors de monter la restriction 15 entre la seconde chambre 83 et la première chambre 82 et la restriction 90 entre la seconde chambre auxiliaire 85 et la première chambre auxiliaire 84.

En variante, on peut aussi monter la restriction 15 entre les chambres auxiliaires 84, 85, et la restriction 90 entre les deux chambres de valve 82, 83. Dans tous les cas, les deux restrictions de commande 15 et 90 doivent être montées de façon que la restriction 15 agisse dans un sens tendant à fermer la soupape 14, et la restriction 90 dans un sens opposé.

Toutes ces variations concernant la position des restrictions de commande peuvent être également appliquées au mode de réalisation de la figure 16.

On peut avoir recours à un piston de valve tel qu'illustré sur les figures 16 et 17 quand on souhaite obtenir le même type de loi d'amortissement que celle permise par le schéma de la figure 9 (force croissante, puis décroissante), et qu'il n'existe qu'un circuit A comme pour l'amortisseur de la figure 1 sans circuit B, ni circuit C, ni point de partage PP.

Dans d'autres modes de réalisation, ce type de piston de valve permet également de disposer les deux restrictions de commande sur le même circuit A, B, ou C. Disposer les deux restrictions de commande sur le circuit C, permet de diminuer la part non filtrée de la force d'amortissement. En variante, les deux restrictions de commande peuvent être montées sur deux circuits différents, par exemple l'une sur le circuit C comme sur les figures 16 et 17 et l'autre sur le circuit B.

L'ajout d'une butée optionnelle telle que celle référencée 18a et représentée en pointillés sur la figure 3, ou référencée 85a et représentée en pointillés sur la figure 16 permet de limiter la force d'amortissement en compression. Une telle butée peut aisément être ajoutée sur chacun des modes de réalisation représentés sur les figures 3 à 8, 10 à 13 et 15 à 17. Si une telle butée est ajoutée, la loi d'amortissement dépend de l'action des restrictions de commande et de filtrage et de la position de la butée. L'action d'une telle butée sur la loi d'amortissement est d'autant plus ressentie par le conducteur que la vitesse de compression se situe dans une plage de vitesse moyenne. Il est alors ressenti une force d'amortissement qui croit, puis plafonne, puis décroît.

Dans certains modes de réalisation, la butée peut être fixe. Dans d'autres modes de réalisation, la position de la butée peut être ajustée de façon à piloter l'amortisseur à distance.

Pour ajuster la caractéristique de l'amortisseur, il est également possible d'utiliser des restrictions de commande et/ou des restrictions de filtrage pilotées, c'est-à-dire pouvant être modifiées à distance. Cette possibilité, qui a été proposée en référence à la restriction 15 de la figure 3 et à la restriction 51 de la figure 4, peut s'appliquer aux restrictions de commande et aux restrictions de filtrage utilisées dans tous les modes de réalisation décrits précédemment.

D'une manière générale, on notera que toutes les caractéristiques distinctives décrites en référence aux différentes figures peuvent être utilisées dans les modes de réalisation des autres figures.

**Revendications**

1.  Amortisseur (1), notamment pour véhicule automobile, comprenant un cylindre (2) contenant un fluide hydraulique, un piston principal (4) actionné par une tige (3), définissant dans le cylindre une première chambre principale (5) et une deuxième chambre principale (6), la deuxième chambre principale contenant la tige, un réservoir de fluide hydraulique (24) et une valve (11) placée dans l'écoulement du fluide hydraulique entre la première chambre principale et la deuxième chambre principale ou entre la première chambre principale et le réservoir, la valve comprenant une soupape mobile (14) coopérant avec un siège (13), un ressort (20) tendant à appliquer la soupape sur son siège, et un piston de valve mobile (17, 78), définissant dans la valve une première chambre de valve (18, 82) et une deuxième chambre de valve (19, 83), ledit piston de valve mobile étant apte à comprimer le ressort et fermer la soupape, l'amortisseur comportant en outre une restriction de commande (15) montée dans l'écoulement du fluide hydraulique issu de la première chambre principale (5) lors d'un mouvement de compression et apte à générer une différence de pression agissant sur les faces respectives du piston de valve, le piston de valve étant monté mobile, coulissant par rapport à la tige de la soupape à l'intérieur de la valve dans un sens tendant à comprimer le ressort lors d'un mouvement de compression, **caractérisé par le fait que** l'amortisseur comporte un moyen de freinage du déplacement du piston de valve mobile (17, 78).

2.  Amortisseur selon la revendication 1 dans lequel le moyen de freinage comprend une restriction de filtrage placée dans l'écoulement du fluide provoqué par le déplacement du piston de valve mobile.

3.  Amortisseur selon la revendication 2 dans lequel la restriction de filtrage est adaptée pour freiner plus l'écoulement dans un sens que dans l'autre de façon à produire un filtrage asymétrique.

4.  Amortisseur selon l'une des revendications 1 à 3 dans lequel un premier circuit (A) relie la première chambre principale (5) à un point de partage (PP) de l'écoulement, un deuxième circuit (B) relie le point de partage (PP) à la deuxième chambre principale (6) et un troisième circuit (C) relie le point de partage (PP) au réservoir (24), la valve (11) ainsi que la restriction de commande (15) étant disposées sur l'un des circuits précités.

5.  Amortisseur selon la revendication 4 dans lequel la valve (11) et la restriction de commande sont disposées sur le même circuit, la restriction de commande étant disposée en amont ou en aval de la valve lors d'un mouvement de compression.

6.  Amortisseur selon l'une des revendications 4 ou 5, **caractérisée en ce qu'**une seconde restriction de commande (90, 112) est montée sur l'un des circuits précités, et est apte à générer une différence de pression agissant sur les faces respectives du piston de valve mobile (17, 78) dans un sens tendant à diminuer la tension du ressort (20), lors d'un mouvement de compression, les caractéristiques des deux restrictions de commande étant de préférence différentes.

7.  Amortisseur selon la revendication 6, **caractérisé en ce que** le piston de valve mobile (78) comporte deux flasques d'extrémité (79, 80) séparés par une gorge périphérique (81) de manière à former, avec une cloison de séparation intérieure (77) dans la valve, une première chambre auxiliaire (84) et une deuxième chambre auxiliaire (85), une restriction de filtrage (91, 93) étant montée dans l'écoulement du fluide provoqué par le déplacement du piston de valve mobile.

8.  Amortisseur selon l'une des revendications 1 à 3 dans lequel le réservoir (24) comprend une chambre à gaz (33) à paroi mobile disposée dans le cylindre au voisinage de son extrémité opposée à la tige du piston principal, un unique circuit reliant la première chambre principale à la deuxième chambre principale, la valve étant disposée dans ledit circuit avec la restriction de commande en amont ou en aval de la valve lors d'un mouvement de compression

9.  Amortisseur selon l'une quelconque des revendications précédentes, **caractérisé en ce que** la soupape mobile (14) comporte un anneau de contact formant une excroissance annulaire périphérique sur sa base (128) et une pluralité de conduits axiaux (129).

10. Amortisseur selon l'une quelconque des revendications précédentes, **caractérisé en ce que** la tige de la soupape mobile comporte une première partie (14c) présentant une première section ($\sigma1$) et une seconde partie (14d) présentant une seconde section ($\sigma2$), la valve de commande comportant une première chambre supplémentaire (130) et une seconde chambre supplémentaire (133), à l'intérieur desquelles peut se déplacer la première partie (14c) de la tige de la soupape mobile (14).

**11.** Amortisseur selon la revendication 10, dans lequel le rapport de la première section ($\sigma$1) de la première partie (14c) à la deuxième section ($\sigma$2) de la deuxième partie (14d) de la tige (14a) de la soupape mobile (14) est le même que le rapport de la surface du piston principal (4) de l'amortisseur à la section de la tige (3) de l'amortisseur.

**12.** Amortisseur selon l'une quelconque des revendications précédentes, **caractérisé en ce que** le réservoir de fluide hydraulique (24, 34) est relié à la première chambre principale par une conduite (40) sur laquelle est disposée une pièce de connexion (161) tenant à la fois le rôle de clapet anti-retour et de point de connexion entre une pluralité de conduites (161, 162) reliant entre elles, lors d'une détente, au moins l'une des chambres (18, 19, 82, 83, 84, 85) adjacentes au piston de valve mobile (17, 78) et le réservoir (24) de fluide hydraulique.

**13.** Amortisseur selon l'une quelconque des revendications précédentes, **caractérisé en ce que** la valve (11) est disposée à l'extérieur de l'amortisseur, et connectée aux deux chambres principales (5, 6) par l'intermédiaire d'un tube entourant le cylindre de l'amortisseur.

**14.** Amortisseur selon l'une quelconque des revendications 1 à 12, **caractérisée en ce que** la valve (11) et les différentes restrictions sont montées dans le piston principal (4), la tige (3) est creuse et fait communiquer la valve (11) avec un réservoir (24, 34) disposé à l'extrémité de la tige opposée au piston principal.

**15.** Amortisseur selon l'une des revendications précédentes dont la force d'amortissement peut être modifiée soit au moyen d'une butée, éventuellement mobile, soit au moyen d'une restriction de commande et/ou d'une restriction de filtrage pilotable à distance.

**Patentansprüche**

**1.** Stoßdämpfer (1), insbesondere für ein Kraftfahrzeug, einen Zylinder (2) umfassend, der eine Hydraulikflüssigkeit enthält, einen Hauptkolben (4), der durch eine Stange (3) betätigt wird, der in dem Zylinder eine erste Hauptkammer (5) und eine zweite Hauptkammer (6) definiert, wobei die zweite Hauptkammer die Stange enthält, einen Tank für Hydraulikflüssigkeit (24) und ein Ventil (11), das in der Strömung der Hydraulikflüssigkeit zwischen der ersten Hauptkammer und der zweiten Hauptkammer oder zwischen der ersten Hauptkammer und dem Tank platziert ist, wobei das Ventil ein bewegliches Ventilorgan (14) umfasst, das mit einem Sitz (13) zusammenwirkt, eine Feder (20), die dazu tendiert, das Ventilorgan an seinem Sitz anzulegen, und einen beweglichen Ventilkolben (17, 78), der in dem Ventil eine erste Ventilkammer (18, 82) und eine zweite Ventilkammer (19, 83) definiert, wobei der bewegliche Ventilkolben imstande ist, die Feder zu komprimieren und das Ventilorgan zu schließen, wobei der Stoßdämpfer weiter eine Steuerungseinengung (15) beinhaltet, die in der Strömung der bei einer Kompressionsbewegung aus der ersten Hauptkammer (5) stammenden Hydraulikflüssigkeit angebracht ist, und imstande ist, einen Druckunterschied zu erzeugen, der auf die jeweiligen Seiten des Ventilkolbens wirkt, wobei der Ventilkolben beweglich, in Bezug auf die Stange des Ventilorgans im Inneren des Ventils in eine Richtung gleitend angebracht ist, die dazu tendiert, die Feder bei einer Kompressionsbewegung zu komprimieren, **dadurch gekennzeichnet, dass** der Stoßdämpfer ein Bremsmittel für die Verschiebung des beweglichen Ventilkolbens (17, 78) beinhaltet.

**2.** Stoßdämpfer nach Anspruch 1, wobei das Bremsmittel Filterungseinengung umfasst, die in der Strömung der Flüssigkeit platziert ist, die durch die Verschiebung des beweglichen Ventilkolbens hervorgerufen wird.

**3.** Stoßdämpfer nach Anspruch 2, wobei die Filterungseinengung angepasst ist, um die Strömung in einer Richtung mehr zu bremsen als in die andere, um eine asymmetrische Filterung zu erzeugen.

**4.** Stoßdämpfer nach einem der Ansprüche 1 bis 3, wobei ein erster Kreislauf (A) die erste Hauptkammer (5) mit einem Teilungspunkt (PP) der Strömung verbindet, ein zweiter Kreislauf (B) den Teilungspunkt (PP) mit der zweiten Hauptkammer (6) verbindet und ein dritter Kreislauf (C) den Teilungspunkt (PP) mit dem Tank (24) verbindet, wobei das Ventil (11), sowie die Steuerungseinengung (15) in einem der zuvor genannten Kreisläufe angeordnet sind.

**5.** Stoßdämpfer nach Anspruch 4, wobei das Ventil (11) und die Steuerungseinengung in demselben Kreislauf angeordnet sind, wobei die Steuerungseinengung bei einer Kompressionsbewegung stromaufwärts oder stromabwärts des Ventils angeordnet ist.

**6.** Stoßdämpfer nach einem der Ansprüche 4 oder 5, **dadurch gekennzeichnet, dass** eine zweite Steuerungseinengung (90, 112) in einem der zuvor genannten Kreisläufe angebracht ist, und imstande ist, einen Druckunterschied zu erzeugen, der auf die jeweiligen Seiten des beweglichen Ventilkolbens (17, 78) in einer Richtung wirkt, die dazu tendiert, die Spannung der Feder (20) bei einer Kompressionsbewegung zu verringern, wobei die Merkmale der beiden Steuerungseinengungen vorzugsweise unterschiedlich sind.

7. Stoßdämpfer nach Anspruch 6, **dadurch gekennzeichnet, dass** der bewegliche Ventilkolben (78) zwei Endflansche (79, 80) beinhaltet, die durch eine periphere Nut (81) derart getrennt sind, um mit einer inneren Trennwand (77) in dem Ventil eine erste Hilfskammer (84) und eine zweite Hilfskammer (85) zu bilden, wobei eine Filterungseinengung (91, 93) in der Strömung der Flüssigkeit angebracht ist, die durch die Verschiebung des beweglichen Ventilkolbens hervorgerufen wird.

8. Stoßdämpfer nach einem der Ansprüche 1 bis 3, wobei der Tank (24) eine Gaskammer (33) mit beweglicher Wand umfasst, die in dem Zylinder in der Nähe ihres gegenüberliegenden Endes zur Stange des Hauptkolbens angeordnet ist, wobei ein einziger Kreislauf die erste Hauptkammer mit der zweiten Hauptkammer verbindet, wobei das Ventil bei einer Kompressionsbewegung in dem Kreislauf mit der Steuerungseinengung stromaufwärts oder stromabwärts des Ventils angeordnet ist.

9. Stoßdämpfer nach einem der vorstehenden Ansprüche, **dadurch gekennzeichnet, dass** das bewegliche Ventilorgan (14) einen Kontaktring beinhaltet, der eine periphere, ringförmige Ausstülpung an seiner Basis (128) und eine Vielzahl von axialen Leitungen (129) bildet.

10. Stoßdämpfer nach einem der vorstehenden Ansprüche, **dadurch gekennzeichnet, dass** die Stange des beweglichen Ventilorgans einen ersten Teil (14c) beinhaltet, der einen ersten Querschnitt ($\sigma$1) aufweist, und einen zweiten Teil (14d), der einen zweiten Querschnitt ($\sigma$2) aufweist, wobei das Steuerungsventil eine erste zusätzliche Kammer (130) und eine zweite zusätzliche Kammer (133) beinhaltet, in deren Inneren sich der erste Teil (14c) der Stange des beweglichen Ventilorgans (14) verschieben kann.

11. Stoßdämpfer nach Anspruch 10, wobei das Verhältnis des ersten Querschnitts ($\sigma$1) des ersten Teils (14c) zum zweiten Querschnitt ($\sigma$2) des zweiten Teils (14d) der Stange (14a) des beweglichen Ventilorgans (14) dasselbe ist, wie das Verhältnis der Oberfläche des Hauptkolbens (4) des Stoßdämpfers zum Querschnitt der Stange (3) des Stoßdämpfers.

12. Stoßdämpfer nach einem der vorstehenden Ansprüche, **dadurch gekennzeichnet, dass** der Tank für Hydraulikflüssigkeit (24, 34) durch eine Leitung (40) mit der ersten Hauptkammer verbunden ist, auf der ein Anschlussstück (161) angeordnet ist, dass sowohl die Rolle eines Rückschlagventils und eines Anschlusspunktes zwischen einer Vielzahl von Leitungen (161, 162) einnimmt, die bei einer Entspannung mindestens eine der an den beweglichen Ventilkolben (17, 78) angrenzenden Kammern (18, 19, 82, 83, 84, 85) und den Tank für Hydraulikflüssigkeit (24) miteinander verbindet.

13. Stoßdämpfer nach einem der vorstehenden Ansprüche, **dadurch gekennzeichnet, dass** das Ventil (11) außerhalb des Stoßdämpfers angeordnet ist, und durch ein Rohr, das den Zylinder des Dämpfers umgibt, mit den beiden Hauptkammern (5, 6) verbunden ist.

14. Stoßdämpfer nach einem der Ansprüche 1 bis 12, **dadurch gekennzeichnet, dass** das Ventil (11) und die verschiedenen Einengungen in dem Hauptkolben (4) angebracht sind, die Stange (3) hohl ist, und das Ventil (11) mit einem Tank (24, 34) in Verbindung stehen lässt, der am Ende der Stange gegenüber dem Hauptkolben angeordnet ist.

15. Stoßdämpfer nach einem der vorstehenden Ansprüche, dessen Dämpfungskraft entweder anhand eines eventuell beweglichen Anschlags, oder anhand einer Steuerungseinengung und/oder einer fernsteuerbaren Filterungseinengung verändert werden kann.

**Claims**

1. Shock absorber (1), notably for a motor vehicle, comprising a cylinder (2) containing a hydraulic fluid, a main piston (4) actuated by a rod (3), defining within the cylinder a first main chamber (5) and a second main chamber (6), the second main chamber containing the rod, a reservoir of hydraulic fluid (24) and a valve (11) placed in the flow of the hydraulic fluid between the first main chamber and the second main chamber or between the first main chamber and the reservoir, the valve comprising a mobile shutter (14) collaborating with a seat (13), a spring (20) tending to press the valve shutter onto its seat, and a mobile valve piston (17, 78) defining within the valve a first valve chamber (18, 82) and a second valve chamber (19, 83), said mobile valve piston being able to compress the spring and close the valve, the shock absorber further comprising a control restriction (15) mounted in the flow of the hydraulic fluid emanating from the first main chamber (5) during a compression movement, and able to generate a pressure difference acting upon the respective faces of the valve piston, the valve piston being mounted with the ability to move, sliding with respect to the valve stem of the valve shutter inside the valve in a direction that tends to compress the spring during a compression movement, **characterized in that** the shock absorber comprises a means for slowing the movement of the mobile valve piston (17, 78).

2. Shock absorber according to Claim 1, wherein the slowing means comprises a filtering restriction placed in the flow of the fluid caused by the movement of the mobile valve piston.

3. Shock absorber according to Claim 2, wherein the filtering restriction is designed to slow the flow more in one direction than in the other so as to produce asymmetric filtering.

4. Shock absorber according to one of Claims 1 to 3, wherein a first circuit (A) connects the first main chamber (5) to a flow split point (PP), a second circuit (B) connects the split point (PP) to the second main chamber (6) and a third circuit (C) connects the split point (PP) to the reservoir (24), the valve (11) together with the control restriction (15) being arranged on one of the aforementioned circuits.

5. Shock absorber according to Claim 4, wherein the valve (11) and the control restriction are arranged on the same circuit, the control restriction being arranged upstream or downstream of the valve during a compression movement.

6. Shock absorber according to one of Claims 4 and 5, **characterized in that** a second control restriction (90, 112) is mounted on one of the aforementioned circuits, and is able to generate a pressure difference acting on the respective faces of the mobile valve piston (17, 78) in a direction that tends to reduce the tension in the spring (20), during a compression movement, the characteristics of the two control restrictions preferably being different.

7. Shock absorber according to Claim 6, **characterized in that** the mobile valve piston (78) comprises two endplates (79, 80) separated by a peripheral groove (81) so as to form, with an interior dividing partition (77) inside the valve, a first auxiliary chamber (84) and a second auxiliary chamber (85), a filtering restriction (91, 93) being mounted in the flow of the fluid brought about by the movement of the mobile valve piston.

8. Shock absorber according to one of Claims 1 to 3, wherein the reservoir (24) comprises a gas chamber (33) with a mobile wall arranged in the cylinder near its opposite end to the rod of the main piston, a single circuit connecting the first main chamber to the second main chamber, the valve being arranged in said circuit with the control restriction upstream or downstream of the valve during a compression movement.

9. Shock absorber according to any one of the preceding claims, **characterized in that** the mobile shutter (14) comprises a contact ring forming a peripheral annular projection on its base (128) and a plurality of axial ducts (129).

10. Shock absorber according to any one of the preceding claims, **characterized in that** the valve stem of the mobile shutter comprises a first part (14c) having a first cross section ($\sigma$1) and a second part (14d) having a second cross section ($\sigma$2), the control valve comprising a first additional chamber (130) and a second additional chamber (133), inside which chambers the first part (14c) of the valve stem of the mobile shutter (14) can move.

11. Shock according to Claim 10, wherein the ratio of the first cross section ($\sigma$1) of the first part (14c) to the second cross section ($\sigma$2) of the second part (14d) of the valve stem (14a) of the mobile shutter (14) is the same as the ratio of the surface area of the main piston (4) of the shock absorber to the cross section of the rod (3) of the shock absorber.

12. Shock absorber according to any one of the preceding claims, **characterized in that** the reservoir of hydraulic fluid (24, 34) is connected to the first main chamber by a pipe (40) on which there is arranged a connecting piece (161) acting both as a check valve and as a point of connection between a plurality of pipes (161, 162) which connect to one another, during a relaxation, at least one of the chambers (18, 19, 82, 83, 84, 85) adjacent to the mobile valve piston (17, 78) and the reservoir (24) of hydraulic fluid.

**13.** Shock absorber according to any one of the preceding claims, **characterized in that** the valve (11) is arranged on the outside of the shock absorber and is connected to the two main chambers (5, 6) by means of a tube surrounding the cylinder of the shock absorber.

**14.** Shock absorber according to any one of Claims 1 to 12, **characterized in that** the valve (11) and the various restrictions are mounted in the main piston (4), the rod (3) is hollow and causes the valve (11) to communicate with a reservoir (24, 34) arranged at the opposite end of the rod to the main piston.

**15.** Shock absorber according to one of the preceding claims of which the damping force can be altered either by means of a limit stop, possibly a mobile stop, or by means of a control restriction and/or of a filtering restriction that can be controlled remotely.

## FIG.1

# FIG.2

# FIG.3

# FIG.4

# FIG.5

# FIG.6

# FIG.7

# FIG.8

# FIG.9

force hydraulique
exercée sur le piston
de valve

Restriction 15

Restriction 112

Vitesse de
compression

# FIG.10

# FIG.11

# FIG.12

# FIG.13

# FIG.14

# FIG.15

# FIG.16

# FIG.17

**EP 3 132 157 B1**

## RÉFÉRENCES CITÉES DANS LA DESCRIPTION

**Documents brevets cités dans la description**

- FR 2838172

- DE 102007009012